# EUROPÄISCHE PATENTSCHRIFT

(11) **EP 3 042 118 B1**
(45) Veröffentlichungstag und Bekanntmachung des Hinweises auf die Patenterteilung: **22.11.2017**
(21) Anmeldenummer: 14777488.9
(22) Anmeldetag: 28.08.2014
(51) Int. Cl.: F21S 8/10

(54) **BELEUCHTUNGSVORRICHTUNG EINES KRAFTFAHRZEUGSCHEINWERFERS MIT EINER OPTISCHEN STRUKTUR**
LIGHTING DEVICE OF A MOTOR VEHICLE HEADLIGHT WITH AN OPTICAL STRUCTURE
DISPOSITIF D'ÉCLAIRAGE D'UN PHARE DE VÉHICULE AUTOMOBILE AVEC UNE STRUCTURE OPTIQUE

(30) Priorität: 03.09.2013 AT 505422013
(43) Veröffentlichungstag der Anmeldung: 13.07.2016
(73) Patentinhaber: ZKW Group GmbH, 3250 Wieselburg (AT)
(72) Erfinder: KIESLINGER, Dietmar, 2604 Theresienfeld (AT)
(74) Vertreter: Patentanwaltskanzlei Matschnig & Forsthuber OG
(86) Internationale Anmeldenummer: PCT/AT2014/050189
(87) Internationale Veröffentlichungsnummer: WO 2015/031924

(56) Entgegenhaltungen:
- EP-A2- 2 587 125
- WO-A1-2013/104785
- WO-A1-2014/027020
- DE-A1- 3 602 262
- DE-A1- 4 031 352
- DE-A1- 10 032 509
- DE-A1- 10 226 471
- DE-A1-102005 009 556
- DE-A1-102007 063 569
- DE-A1-102008 005 488
- DE-A1-102008 023 551
- DE-A1-102009 017 424
- DE-A1-102009 020 593
- DE-U1- 29 914 114
- JP-A- H03 122 902
- US-A- 1 601 688
- US-A- 1 699 224
- US-A1- 2008 247 188

## Beschreibung

Die Erfindung betrifft eine Beleuchtungsvorrichtung eines Kraftfahrzeugscheinwerfers mit einer, vorzugsweise genau einer optischen Struktur, welche Beleuchtungsvorrichtung zur Abstrahlung von Licht eingerichtet ist, welches von der Beleuchtungsvorrichtung abgestrahlte Licht eine vorgegebene Lichtverteilung bildet, wobei die optische Struktur der Beleuchtungsvorrichtung derart zugeordnet oder derart Teil der Beleuchtungsvorrichtung ist, dass die optische Struktur von im Wesentlichen dem gesamten Lichtstrom der Beleuchtungsvorrichtung durchstrahlt wird, und wobei die - von der Beleuchtungsvorrichtung erzeugte, unmodifizierte Lichtverteilung - von der optischen Struktur zu einer vorgebbaren, modifizierten Lichtverteilung modifiziert ist, wobei die modifizierte Lichtverteilung durch Faltung der unmodifizierten Lichtverteilung mit einer Streufunktion gebildet ist, wobei die optische Struktur derart ausgebildet ist, dass die unmodifizierte Lichtverteilung entsprechend der Streufunktion modifiziert ist, wobei die optische Struktur aus einer Vielzahl von optischen Strukturelementen besteht, welche Strukturelemente eine Licht streuende Wirkung aufweisen und über zumindest eine, vorzugsweise genau eine definierte Fläche zumindest eines, vorzugsweise genau eines Optikelementes verteilt sind.

Außerdem betrifft die Erfindung einen Fahrzeugscheinwerfer mit zumindest einer solchen Beleuchtungsvorrichtung.

Nach den gesetzlichen Bestimmungen haben Lichtverteilungen von Fahrzeugscheinwerfern eine Reihe von Voraussetzungen zu erfüllen.

Zum Beispiel sind nach ECE und SAE oberhalb der Hell-Dunkellinie (HD-Linie) - also außerhalb des primär beleuchteten Bereichs - in bestimmten Regionen minimale und maximale Lichtstärken erforderlich. Diese fungieren als "Signlight" und ermöglichen das Ausleuchten von Überkopf-Wegweisern bei Anstrahlung durch vorbeifahrende Fahrzeuge. Die verwendeten Lichtstärken liegen üblicherweise über den üblichen Streulichtwerten aber bei weitem unter den Lichtstärken unterhalb der HD-Linie. Die geforderten Lichtwerte müssen mit möglichst geringer Blendwirkung erzielt werden.

"Signlight" wird üblicherweise durch spezielle Facetten in der Projektionslinse (Größe zumindest einige Millimeter) oder durch diskrete, kleine Erhebungen realisiert. Nachteilig daran ist insbesondere, dass diese Strukturen von außen als helle Lichtpunkte wahrnehmbar sind und damit vor allem aus Designgründen zunehmend abgelehnt werden. Außerdem sind derartige Vorrichtungen auf das dahinterliegende optische System abgestimmt - werden daran Änderungen vorgenommen, ist die angestrebte Funktion nicht mehr sichergestellt.

Weiters sind aus gesetzlichen Gründen definiert unscharfe Hell-Dunkel-Grenzen notwendig, sodass HD-Linien weder zu scharf noch zu verwaschen abgebildet werden, d.h. die maximale Schärfe der HD-Linie ist gesetzlich definiert. Eine solche Verwischung der HD-Linie führt dazu, dass die HD-Linie vom Fahrer als "weicher" und subjektiv angenehmer empfunden wird.

Die Quantifizierung dieses HD-Übergangs erfolgt durch das Maximum eines Gradienten entlang eines vertikalen Schnitts durch die Helldunkelgrenze. Dazu wird der Logarithmus der Beleuchtungsstärke an Messpunkten in 0,1°-Abständen errechnet und deren Differenz gebildet, wodurch man die Gradientenfunktion erhält. Das Maximum dieser Funktion wird als Gradient der HD-Grenze bezeichnet. Da diese Definition die menschliche Helligkeitswahrnehmung nur ungenau nachbildet, können unterschiedlich wahrgenommene HD-Linien denselben gemessenen Gradientenwert aufweisen bzw. bei ähnlich aussehenden HD-Linien können unterschiedliche Gradienten gemessen werden.

Gradientenaufweichung erfolgt üblicherweise durch die Veränderung der Linsenoberfläche. einer Linse einer Beleuchtungsvorrichtung. Gemäß dem Stand der Technik sind verschiedene Lösungen gebräuchlich: Durch statistisches Aufrauhen der Linsenoberfläche kann beispielsweise eine weichere HD-Grenze erreicht werden, allerdings kommt es dadurch zur Blendung entgegenkommender Verkehrsteilnehmer. In anderen Varianten wird eine Modulation (z.B. Überlagerung von zwei Sinuswellen, kleine Vertiefungen in Form von Kugelabschnitten, etc.) auf die Linsenoberfläche aufgebracht. Derartige Lösungen sind stark von der Lichtstromverteilung durch die Linse abhängig, diesbezügliche Änderungen, beispielsweise durch Variation der Lichttechnik, wirken sich dann stark und teilweise negativ auf die erzeugte Lichtstromverteilung aus.

Ein anderes Thema bildet die Erzeugung von segmentierten Lichtverteilungen. Solche kommen beispielsweise bei der Erzeugung von dynamischen Lichtverteilungen, etwa einer dynamischen Fernlichtverteilung, zum Einsatz. Bei speziellen Ausführungsformen wird eine solche dynamische Lichtverteilung aus einer Anzahl an Einzellichtverteilungen aufgebaut. Dazu wird beispielsweise mit einzelnen Lichtquellen, welchen jeweils eine Vorsatzoptik zugeordnet ist, jeweils ein kleines Segment im Lichtbild erzeugt, die Überlagerung dieser Lichtsegmente ergibt dann die gesamte Lichtverteilung. Durch Abschalten einzelner Lichtquellen können dabei einzelne Segmente im Lichtbild abgeschaltet, also nicht beleuchtet werden. Die Segmente sind dabei üblicherweise in Zeilen und Spalten angeordnet. Das Dokument EP 2587125 A2 offenbart eine Beleuchtungsvorrichtung mit matrixartig angeordneten Leuchtdioden, die eine segmentierte Lichtverteilung generieren. Grundsätzlich besteht die Möglichkeit, die einzelnen Lichtsegmente mit scharfen Begrenzungskanten abzubilden und Maßnahmen zu treffen, dass benachbarte Lichtsegmente unmittelbar aneinander grenzen. Dies hat den Vorteil, dass im "Volllicht"-Betrieb, d.h. bei Aktivierung aller Lichtsegmente keine dunklen Bereiche ("Gitter") zwischen den Lichtsegmenten zu erkennen sind. Der Nachteil liegt allerdings darin, dass bei einem Abschalten von einem oder mehreren Lichtsegmenten die Lichtverteilung in diesen Bereichen eine scharfe Hell-Dunkel-Grenze aufweist, was als unangenehm empfunden wird und zusätzlich zu einer raschen Ermüdung führt.

Ein anderer Ansatz besteht darin, die Lichtsegmente nicht unmittelbar aneinander angrenzen zu lassen. Als problematisch bei solchen Lichtverteilungen hat sich herausgestellt, dass es dabei naturgemäß zu unerwünschten Lichteffekten im Bereich der aneinander angrenzenden Segmente kommt, insbesondere kommt es dabei zu Helligkeitsschwankungen in diesem Bereich, die sich in einer sichtbaren Gitterstruktur äußern, die von einem Fahrzeuglenker als unangenehm empfunden werden kann.

Außerdem besteht auch in diesem Fall in der Regel noch immer das Problem der scharfen Hell-Dunkel-Grenze.

Die beschriebenen Nachteile des Stands der Technik sollen ausgeräumt werden. Es ist daher eine Aufgabe der Erfindung, ein refraktives optisches Bauteil bereit zu stellen, mit dem ein Lichtbild realisiert werden kann, das die Gesetzeswerte erfüllt und gleichzeitig nicht als störend empfunden wird.

Diese Aufgabe wird mit einer eingangs erwähnten Beleuchtungsvorrichtung mit einer optischen Struktur erfindungsgemäß dadurch gelöst, dass die Lichtverteilung als eine segmentierte aus Einzellicht-Verteilungen gebildete abgeblendete Lichtverteilung, insbesondere eine Abblendlichtverteilung, ausgebildet ist, wobei die Einzellicht-Verteilungen in n Zeilen und m Spalten angeordnet sind, wobei n > 1, m ≥ 1 oder n ≥ 1, m > 1 gilt, und die abgeblendete Lichtverteilung, insbesondere die Abblendlichtverteilung, eine Hell-Dunkel-Grenze aufweist, die definierte Fläche in ein - gedachtes -, hexagonales Gitter unterteilt ist, wobei die Strukturelemente an den Gitterpunkten oder zwischen den Gitterpunkten des hexagonalen Gitters angeordnet sind, wobei benachbarte Strukturelemente ineinander übergehend, d.h. einander berührend angeordnet sind oder die Strukturelemente voneinander isoliert, d.h. einander nicht berührend angeordnet sind, und die optische Struktur, insbesondere die Strukturelemente derart ausgebildet ist/sind bzw. die Streufunktion derart ausgestaltet ist, dass zumindest ein Teil des Lichtstroms der Beleuchtungsvorrichtung in die Grenzbereiche, in welchen jeweils zwei Einzellicht-Verteilungen aneinandergrenzen, abgelenkt wird, ein Anteil des Lichtstroms der Beleuchtungsvorrichtung in einen Bereich oberhalb der Hell-Dunkel-Grenze abgebildet wird, wobei der abgelenkte Lichtstrom vorzugsweise in einem Bereich zwischen 1,5° und 4°, insbesondere zwischen 2° und 4° über der HH-Linie liegt, wobei vorzugsweise von der optischen Struktur ca. 1% des Lichtstroms der Beleuchtungsvorrichtung in einen Bereich oberhalb der Hell-Dunkel-Grenze abgelenkt wird und der Gradient der Hell-Dunkel-Grenze der - unmodifizierten - Lichtverteilung der Beleuchtungsvorrichtung reduziert ist.

Gemäß der Erfindung wird somit die gesamte optische Struktur betrachtet, und diese wird entsprechend über eine Streufunktion derart modifiziert bzw. geformt, dass sich das vollständige gewünschte Lichtbild ergibt. Anders als im Stand der Technik, wo beispielsweise zur Erzeugung der Gradientenaufweichung und von Signlight unterschiedliche Strukturelemente auf einer optischen Struktur herangezogen werden oder manche der bestehende Strukturelemente zusätzlich noch modifiziert werden, wird entsprechend der vorliegenden Erfindung die gewünschte (modifizierte) Lichtverteilung, ausgehend von einer unmodifizierten, mit der Beleuchtungsvorrichtung ohne optische Struktur erzeugten Lichtverteilung, dadurch realisiert, dass die unmodifizierte Lichtverteilung mit einer solchen Streufunktion gefaltet ist, dass sich die gewünschte Lichtverteilung ergibt, und die optische Struktur in ihrer Gesamtheit wird dann derart geformt, dass sie den gesamten Lichtstrom der Beleuchtungsvorrichtung derart modifiziert, dass sich aus der unmodifizierten Lichtverteilung eine der Streufunktion entsprechend modifizierte Lichtverteilung ergibt.

Der "Aufbau" einer Gesamtlichtverteilung aus Einzel-Lichtverteilungen hat den Vorteil, dass z.B. wie oben beschrieben durch Ausblenden einzelner Lichtsegmente (Einzellichtverteilungen) bestimmte Bereiche ausgeblendet werden können. Dazu ist es von Vorteil, wenn die Einzellichtverteilungen vergleichsweise scharfe angegrenzt sind, was allerdings den Nachteil mit sich bringt, dass sich eine optische Gitterstruktur bilden kann, mit dunklen oder abgedunkelten Bereichen zwischen den Lichtsegmenten, welche als optisch unangenehm empfunden werden können und u.U. gesetzlich auch nicht zulässig sind.

Mit der Erfindung ist es auf einfache Weise möglich, ausreichend Licht in diese dunklen oder abgedunkelten Bereiche zwischen den Lichtsegmenten abzustrahlen, sodass diese Gitterstruktur nicht mehr sichtbar ist.

Die Unterteilung der definierten Fläche in ein gedachtes hexagonales Gitter bringt den Vorteil, dass dadurch eine optimale Flächenfüllung der definierten Fläche erreicht wird, insbesondere bei Strukturelementen mit kreisrunder Basis, sodass ca. 87% der definierten Fläche mit Strukturelementen bedeckt sind und lediglich ca. 13% unmodifizierte Fläche vorliegen.

Die "Weichheit" des Übergangs wird, wie dies in der DE 10 2008 023 551 A1 im Detail beschrieben und hier auszugsweise wiederholt wird, durch das Maximum des Gradienten entlang eines vertikalen Schnittes durch die Helldunkelgrenze bei -2,5° horizontal beschrieben. Dazu wird der Logarithmus der Beleuchtungsstärke an 0,1° vertikal voneinander entfernt liegenden Messpunkten errechnet und deren Differenz gebildet, wodurch man die sogenannte Gradientenfunktion erhält. Das Maximum der Gradientenfunktion wird als Gradient der Helldunkelgrenze bezeichnet. Je größer dieser Gradient ist, desto schärfer ist der Helldunkel-Übergang. Die vertikale Position des Maximums dieser Funktion beschreibt auch den Ort, an dem die sogenannte Helldunkelgrenze erkannt wird, das heißt die Stelle, die das menschliche Auge als Grenzelinie zwischen "hell" und "dunkel" wahrnimmt (etwa bei -0,5° vertikal).

Eine Beleuchtungsvorrichtung erzeugt - ohne erfindungsgemäße optische Struktur - eine Abblendlichtverteilung mit einer Hell-Dunkel-Grenze mit einer gewissen Schärfe, beschrieben durch den sogenannten "Gradienten". Durch Vorsehen einer erfindungsgemäßen optischen Struktur wird diese - unmodifizierte - Lichtverteilung derart modifiziert, dass die Schärfe der Hell-Dunkel-Grenze verringert wird, sodass sie den gesetzlichen Anforderungen entspricht und vom menschlichen Auge als angenehm wahrgenommen wird.

Darüber hinaus kann mit der erfindungsgemäßen optischen Struktur auf optimale Weise ein eingangs beschriebenes Signlight erzeugt werden, in dem beispielsweise jedes optische Strukturelement einen geringen Anteil des durch das Strukturelement durchtretenden Lichtstromes in einen entsprechenden Bereich ablenkt.

Insbesondere ist es von Vorteil, dass mit einer erfindungsgemäßen optischen Struktur sowohl der Gradient der Hell-Dunkel-Grenze eingestellt als auch ein Signlight erzeugt werden kann. Im Stand der Technik sind dazu zwei optische Strukturen notwendig, wobei einer ersten Struktur zum Erzeugen einer der beiden optischen "Effekte" eine zweite Struktur überlagert wird, welche den zweiten optischen "Effekt" erzeugt. Bei der erfindungsgemäßen optischen Struktur wird dies durch eine Struktur bestehend aus im Wesentlichen identischen Strukturelementen erreicht, welche zur "Realisierung" einer Streufunktion wie oben beschrieben ausgebildet sind.

Von besonderem Vorteil ist es, wenn die optischen Strukturelemente derart ausgebildet sind, dass jedes Strukturelement das durch das Strukturelement durchtretende Lichtbündel entsprechend der Streufunktion zu einem modifizierten Lichtbündel modifiziert.

Betrachtet man ein bestimmtes (unmodifiziertes) Lichtbündel aus dem gesamten Lichtstrom, so bildet dieses einen gewissen Beitrag zu der Lichtverteilung im Lichtbild (der gesamte Lichtstrom erzeugt die (Gesamt)-Lichtverteilung). Ein Strukturelement modifiziert nun ein durch das Strukturelement durchtretende Lichtbündel derart, dass der unmodifizierte Beitrag zu der Gesamtlichtverteilung entsprechend der Streufunktion verändert wird. Beispielsweise erzeugt das unmodifizierte Lichtbündel einen Lichtverteilungsbeitrag mit einer bestimmten Form, d.h. es werden bestimmte Bereiche auf der Fahrbahn oder auf einem Messschirm beleuchtet, andere Bereiche sind unbeleuchtet. Durch das Strukturelement werden nun entsprechend der Streufunktion auch Bereiche außerhalb des ursprünglich beleuchteten Bereiches mit einer bestimmten Intensität beleuchtet, während - nachdem der Gesamtlichtstrom konstant bleibt - die Intensität zumindest in Teilen des mit dem unmodifizierten Lichtbündel ursprünglich beleuchteten Bereiches reduziert ist.

Bei einer Ausführungsform der Erfindung ist vorgesehen, dass die optische Struktur auf zumindest einer, vorzugsweise genau einer Grenzfläche eines Optikelementes, welches in Form einer Streuscheibe oder in Form einer Abdeckscheibe der Beleuchtungsvorrichtung ausgebildet ist, angeordnet ist.

Die eingangs erwähnte "definierte Fläche" liegt somit auf dieser zumindest einen, vorzugsweise genau einen Grenzfläche eines Optikelementes, welches als Streuscheibe oder Abdeckscheibe ausgebildet ist.

Bei einer anderen Ausführungsform ist die optische Struktur auf zumindest einer Oberfläche eines Optikelementes in Form einer Linse, insbesondere einer Projektionslinse der Beleuchtungsvorrichtung angeordnet ist.

Die "definierte Fläche" liegt somit auf einer Oberfläche einer Linse.

Vorzugsweise ist dabei die optische Struktur auf der Lichtaustrittsseite der Linse angeordnet ist.

Die optische Struktur ist somit vorzugsweise auf der gekrümmt ausgebildeten Lichtaustrittsfläche der Linse, vorzugsweise der Projektionslinse, angeordnet.

Von besonderem Vorteil ist es, wenn die Strukturelemente der optischen Struktur über die gesamte zumindest eine Oberfläche eines Optikelementes verteilt sind.

Die "definierte Fläche" ist somit durch die gesamte Oberfläche bzw. Grenzfläche des Optikelementes gebildet.

Weiters ist es von besonderem Vorteil, wenn alle Strukturelemente im Wesentlichen identisch ausgebildet sind.

Jedes Strukturelement modifiziert den durch sie durchtretenden Lichtstrom auf identische Weise wie alle anderen Strukturelemente.

"Im Wesentlichen" identisch bedeutet dabei, dass bei einer ebenen Fläche, auf welcher die Strukturelemente angeordnet sind, diese tatsächlich identisch ausgebildet sind.

Bei gekrümmten Flächen sind die Strukturelemente im zentralen Bereich identisch ausgebildet, während sich durch die Krümmung der Fläche die Randbereiche unterschiedlicher Strukturelemente (geringfügig) voneinander unterscheiden können.

Bei einer konkreten Ausführungsform ist entsprechend vorgesehen, alle Strukturelemente in Bezug auf eine ebene bzw. als eben gedachte Fläche identisch ausgebildet sind.

Entsprechend werden die Strukturelemente für eine ebene Fläche berechnet; werden diese so berechneten, identischen Strukturelemente - mit identischer Ausrichtung - auf eine gekrümmte Fläche beispielsweise einer Linse aufgesetzt, so sind wie oben schon erwähnt die Strukturelemente in ihrem zentralen Bereich nach wie vor identisch ausgebildet; in den Übergangsbereichen zu der ursprünglichen Linsenfläche, auf welche die Strukturelemente aufgesetzt sind, weisen die Strukturelemente aber ja nach Position auf der Linsenfläche auf Grund der Krümmung der Linsenoberfläche eine unterschiedliche Gestalt auf, was aber bei der geringen Größe der Strukturelemente in keinen oder nur sehr geringen Auswirkungen auf die Lichtverteilung resultiert

Weiters ist es von Vorteil, wenn alle Strukturelemente identisch ausgerichtet sind.

Bei einer ebenen definierten Fläche bedarf dies keiner weiteren Erläuterungen. Bei gekrümmten Flächen (Beispiel: Linse) sind die Strukturelemente identisch entlang von Achsen durch die Fläche angeordnet, welche Achsen alle parallel zu einer Symmetrieachse oder zu einer optischen Achse der Fläche verlaufen (und nicht normal auf die Flächennormale).

Dies hat insbesondere fertigungstechnische Vorteile, da die optische Struktur und das Werkzeug zur Erzeugung der Struktur auf diese Weise einfach entfernt werden können, da sich keine Hinterschneidungen an der optischen Struktur bilden können.

Optimal lässt sich eine erfindungsgemäße optische Struktur erzeugen, wenn die Streufunktion (PSF) eine Point-Spread-Function ist.

Weiters gilt auch mit Vorteil, dass die Symmetrie eines Strukturelementes von der Symmetrie der Streufunktion PSF abhängt. Das Strukturelement weist i.A. dieselbe Symmetrieklasse wie die PSF auf. Ist beispielsweise die PSF horizontal spiegelsymmetrisch, so weist auch das Strukturelement eine horizontale Spiegelsymmetrie auf.

Weiters ist mit Vorteil vorgesehen, dass die Abmessung eines Strukturelementes, beispielsweise ein Durchmesser und/oder eine Höhe des Strukturelementes, größer, insbesondere sehr viel größer als die Wellenlänge von sichtbarem Licht ist, sodass Beugungseffekte vermieden werden können.

Insbesondere ist dabei mit Vorteil vorgesehen, dass die Höhe der Strukturelemente im µm-Bereich liegt.

Beispielsweise liegt die Höhe der Strukturelemente im Bereich von 0,5 - 5 µm, wobei vorzugsweise die Höhe der Strukturelemente im Bereich von 1-3 µm liegt.

Bei einer konkreten Ausführungsform beträgt die Höhe der Strukturelemente ca. 2,7 µm.

Weiters ist bei einer konkreten Ausführungsform, z.B. bei Varianten mit den oben beschriebenen Höhen, vorgesehen. dass der Durchmesser bzw. eine Länge der Strukturelemente im Millimeter-Bereich liegt.

Beispielsweise liegt der Durchmesser bzw. eine Länge der Strukturelemente zwischen 0,5 - 2 mm, wobei vorzugsweise der Durchmesser bzw. eine Länge der Strukturelemente ca. 1 mm beträgt.

Bei einer beispielhaften Ausführungsform einer Linse, auf welcher die Strukturelemente angeordnet sind, beträgt der Durchmesser der Linse 90 mm.

Vorteilhafterweise kann außerdem vorgesehen sein, dass die Strukturelemente an ihrer Basis einen Kreisquerschnitt aufweisen. Bei einer gekrümmten definierten Fläche, auf welcher die Strukturelemente angeordnet sind, wird dabei die Projektion der Basis - das ist die auf der definierten Fläche von einem Strukturelement eingenommenen Fläche - in eine Ebene betrachtet.

Strukturelemente sind somit vorzugsweise im Wesentlichen rotationssymmetrisch, können aber je nach Anwendung unterschiedliche Deformationen, d.h. Abweichungen von dieser rotationssymmetrischen Struktur aufweisen, wobei diese Deformationen großflächig sein können, in der Regel ab lokal ausgebildet sind.

In der Herstellung einfach ist eine optische Struktur, wenn die definierte Fläche, auf welcher die Strukturelemente verteilt sind, in eine - gedachte -, vorzugsweise regelmäßige Gitterstruktur unterteilt ist, und wobei die Strukturelemente an den Gitterpunkten oder zwischen den Gitterpunkten der Gitterstruktur angeordnet sind.

Eine solche Anordnung ist insbesondere auch in Hinblick auf eine optimale optische Wirkung der optischen Struktur von Vorteil, da dadurch die optische Auswirkung der optischen Struktur optimal eingestellt werden kann.

Die "Regelmäßigkeit" der Struktur ist dabei bei einer gekrümmten optischen Fläche, auf welcher die optische Struktur angeordnet ist, in Bezug auf eine Projektion dieser definierten Fläche in eine Ebene zu sehen, wobei - auf Grund der geringen Gitterabstände - das Gitter auch bei einer gekrümmten definierten Flächen im Bereich von benachbarten Gitterpunkten als eben betrachtet werden kann.

Vorzugsweise ist vorgesehen, dass an jedem Gitterpunkt oder zwischen den Gitterpunkten der Gitterstruktur jeweils genau ein Strukturelement angeordnet ist.

Bei einer konkreten Ausführungsform der Erfindung ist vorgesehen, dass benachbarte Gitterpunkte einen Abstand von ca. 0,5 - 2mm, vorzugsweise von ca. 1 mm zueinander aufweisen.

Prinzipiell kann bei einer anderen Ausführungsform auch vorgesehen sein, dass die Strukturelemente auf der definierten Fläche zufällig, beispielsweise pseudo-random verteilt sind.

In optischer Hinsicht optimal ist es, wenn der Übergang der Strukturelemente zu der definierten Fläche stetig, vorzugsweise C2-stetig, d.h. mit stetigen Tangenten erfolgt.

Bei einer konkreten Ausführungsform ist dabei vorgesehen, dass der von der optischen Struktur abgelenkte Lichtstrom in einem Bereich zwischen 1,5° und 4°, insbesondere zwischen 2° und 4° über der HH-Linie liegt.

Bei einer beispielhaften Ausführungsform der Erfindung ist vorgesehen, dass von der optischen Struktur 0,5% - 1% des Lichtstroms der Beleuchtungsvorrichtung in einen Bereich oberhalb der Hell-Dunkel-Grenze abgelenkt wird.

Insbesondere ist dies von Vorteil, wenn benachbarte Einzellicht-Verteilungen der unmodifizierten Lichtverteilung einen definierten Abstand bzw. definierte Abstände zueinander aufweisen.

Bei einer konkreten Ausführungsform ist dabei vorgesehen, dass die Einzellicht-Verteilungen der unmodifizierten Lichtverteilung, insbesondere bei einer Projektion auf eine vertikale Ebene, eine rechtseckige oder quadratische Form aufweisen.

Insbesondere ist dabei vorgesehen, dass alle Abstände zwischen benachbarten Einzellicht-Verteilungen in horizontaler Richtung identisch sind.

Weiters kann alternativ oder vorzugsweise zusätzlich noch vorgesehen sein, dass alle Abstände zwischen benachbarten Einzellicht-Verteilungen in vertikaler Richtung identisch sind.

Bei einer konkreten Ausführungsform ist vorgesehen dass die Einzellicht-Verteilungen eine Breite und/oder eine Höhe von ca. 1° aufweisen.

Typischerweise ist der Abstand zwischen zwei benachbarten Einzellicht-Verteilungen kleiner gleich 0,5° und größer 0°.

Beispielsweise ist der Abstand zwischen zwei benachbarten Einzellicht-Verteilungen kleiner gleich 0,2°.

Zum Beispiel liegt der Abstand zwischen zwei benachbarten Einzellicht-Verteilungen zwischen 0,05° und 0,15°.

Weiters kann auch vorgesehen sein, dass der Abstand zwischen zwei benachbarten Einzellicht-Verteilungen kleiner gleich 0,1° ist.

Bei einer konkreten Ausführungsform entspricht die durchschnittliche Lichtintensität in einem Spalt zwischen zwei Einzelllicht-Verteilungen, erzeugt mit dem Lichtstrom, der für eine Einzellicht-Verteilung bestimmt ist, der halben durchschnittlichen Lichtintensität in einer angrenzenden Einzellicht-Verteilung der modifizierten Lichtverteilung, sodass die Gesamt-Lichtintensität, die mit Licht, welches für die beiden angrenzenden Einzellicht-Verteilungen bestimmt ist, im Wesentlichen der Lichtintensität der Einzellicht-Verteilungen der modifizierten Lichtverteilung entspricht.

Vorzugsweise ist die Lichtintensität in allen Einzellicht-Verteilungen dabei im Wesentlichen identisch, ebenso ist vorteilhafterweise die Intensität in den Einzellicht-Verteilungen im Wesentlichen homogen über die gesamte Fläche der Einzellicht-Verteilung

Wie oben schon erwähnt ist es von besonderem Vorteil, wenn durch die optische Struktur ein Teil jenes Lichtstroms, welcher ohne optische Struktur ausschließlich eine Einzellicht-Verteilung erzeugt, in die diese Einzellicht-Verteilung einrahmenden Spaltenbereiche, welche sich durch die Beabstandung der Einzellicht-Verteilungen zueinander ergeben, abgelenkt wird.

Die dunklen Randbereiche um die Einzellichtverteilungen werden somit ausschließlich mit Licht aus an diese Randbereiche angrenzenden Einzellichtverteilungen ausgeleuchtet, sodass bei einem Abschalten einzelner Einzellichtverteilungen die abgeschalteten Bereiche im Gesamtlichtbild nach wie vor dunkel erscheinen und nicht durch Streulicht "aus" anderen Einzellichtverteilungen beleuchtet sind.

Bevorzugt ist vorgesehen, dass ausgehend von einer betrachteten Einzellicht-Verteilung die Lichtintensität in einem angrenzenden Spalt in Richtung der benachbarten Einzellicht-Verteilung hin abnimmt, wobei die Abnahme vorzugsweise linear verläuft.

Nachdem ein Spalt mit einem Teil des Lichtes, welches für die beiden angrenzenden Einzellicht-Verteilungen bestimmt ist (im Kreuzungsbereich der Spalten einen Teil des Lichtes von vier Einzellicht-Verteilungen), beleuchtet wird, ergibt sich - insbesondere bei einem linearen Verlauf der Intensität - eine annähernd konstante Lichtintensität über den gesamten Spalt.

Insbesondere ist vorgesehen, dass die Lichtintensität auf Null abnimmt.

Außerdem ist mit Vorteil noch vorgesehen, dass die Lichtintensität in einem Spalt, unmittelbar an den Rand der betrachteten Einzellicht-Verteilung angrenzend, im Wesentlichen der Lichtintensität der Einzellicht-Verteilung der modifizierten Lichtverteilung an ihrem Rand bzw. der durchschnittlichen Lichtintensität in der Einzellicht-Verteilung der modifizierten Lichtverteilung entspricht.

Generell ist es von Vorteil, wenn die optische Struktur derart angeordnet und/oder ausgebildet ist, dass im Wesentlichen der gesamte, vorzugsweise der gesamte Lichtstrom der Beleuchtungsvorrichtung auf die optische Struktur auftrifft.

Auf diese Weise kann der gesamte Lichtstrom für die Modifikation der ursprünglichen Lichtverteilung herangezogen werden.

Insbesondere ist es von Vorteil, wenn die optische Struktur derart angeordnet und/oder ausgebildet ist, dass sie im Wesentlichen homogen ausgeleuchtet ist.

Schließlich betrifft die Erfindung noch eine Beleuchtungsvorrichtung, wobei die Beleuchtungsvorrichtung ein Projektionssystem ist. Vorzugsweise ist in diesem Fall vorgesehen, dass die Beleuchtungsvorrichtung zumindest eine Lichtquelle, zumindest einen Reflektor und zumindest eine Linse, insbesondere eine Projektionslinse umfasst, und wobei vorzugsweise vorgesehen ist, dass die zumindest eine optische Struktur auf der Linse und/oder einer zusätzlichen Abdeck- oder Streuscheibe angeordnet ist.

Es kann aber auch vorgesehen sein, dass die Beleuchtungsvorrichtung ein Reflexionssystem ist.

Dabei ist es von Vorteil, wenn die Beleuchtungsvorrichtung zumindest einen Freiform-Reflektor und zumindest einen Lichtquelle sowie zumindest eine Streuscheibe und/oder zumindest eine Abdeckscheibe umfasst, und wobei vorteilhafterweise die zumindest eine optische Struktur auf der zumindest einen Streuscheibe und/oder der zumindest einen Abdeckscheibe und/oder einer zusätzlichen Abdeck- oder Streuscheibe angeordnet ist.

Im Folgenden ist die Erfindung an Hand der Zeichnung näher erörtert. In dieser zeigt.
Fig. 1 eine schematische Darstellung eines Projektionsmoduls nach dem Stand der Technik,
Fig. 2 eine schematische Darstellung eines Reflexionsmoduls nach dem Stand der Technik,
Fig. 3 eine schematische Darstellung eines Projektionsmoduls mit einer optischen Struktur an der Außenseite einer Linse,
Fig. 4 eine schematische Darstellung eines Reflexionsmoduls mit einer optischen Struktur an der Außenseite einer Abdeck- oder Streuscheibe,
Fig. 5 eine schematische Darstellung eines Projektionsmoduls mit einer optischen Struktur auf einem zusätzlichen Optikelemente wie einer Scheibe,
Fig. 6 eine schematische Darstellung eines Reflexionsmoduls mit einer optischen Struktur auf einem zusätzlichen Optikelemente wie einer Scheibe,
Fig. 7 eine "herkömmliche", unmodifizierte Abblendlichtverteilung erzeugt mit einer Beleuchtungsvorrichtung nach dem Stand der Technik,
Fig. 7a einzelne, mit Bereichen einer Beleuchtungsvorrichtung nach dem Stand der Technik erzeugte Lichtflecken,
Fig. 7b eine größere Anzahl an Lichtflecken wie in Figur 7a dargestellt,
Fig. 8 eine modifizierte Abblendlichtverteilung erzeugt mit einer erfindungsgemäßen Beleuchtungsvorrichtung,
Fig. 8a die Lichtflecken aus Figur 7a, modifizierte entsprechend einer Streufunktion zur kombinierten Gradientenaufweichung und Erzeugung eines Signlights,
Fig. 8b die Lichtflecken aus Figur 7b, entsprechend mit der Streufunktion modifiziert,
Fig. 9 ein einzelner Lichtfleck aus Figur 7a bzw. 7b, modifiziert mit einer Streufunktion zur kombinierten Gradientenaufweichung und Erzeugung eines Signlights
Fig. 10 eine Linse aus einem Projektionsmodul nach dem Stand der Technik und ein vergrößerter Abschnitt des Verlauf der Kontur der Außenseite dieser Linse,

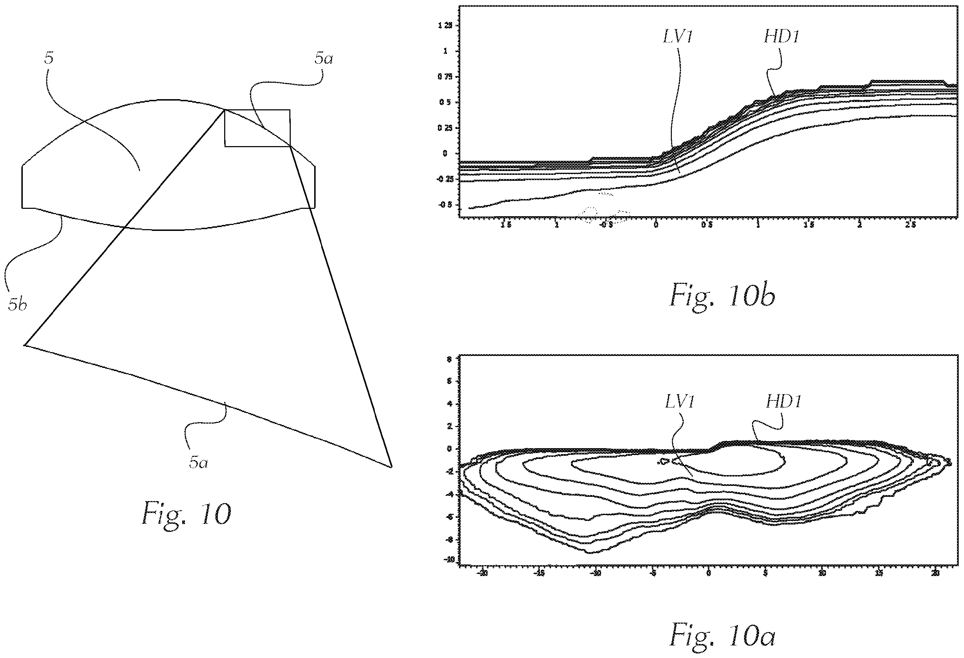

Fig. 10 a eine schematische Darstellung einer Abblendlichtverteilung, erzeugt mit einer Beleuchtungsvorrichtung mit einer Linse aus Figur 10,
Fig. 10b eine schematische Darstellung der Abblendlichtverteilung aus Figur 10a im Bereich des Asymmetrie-Abschnittes der Hell-Dunkel-Grenze,

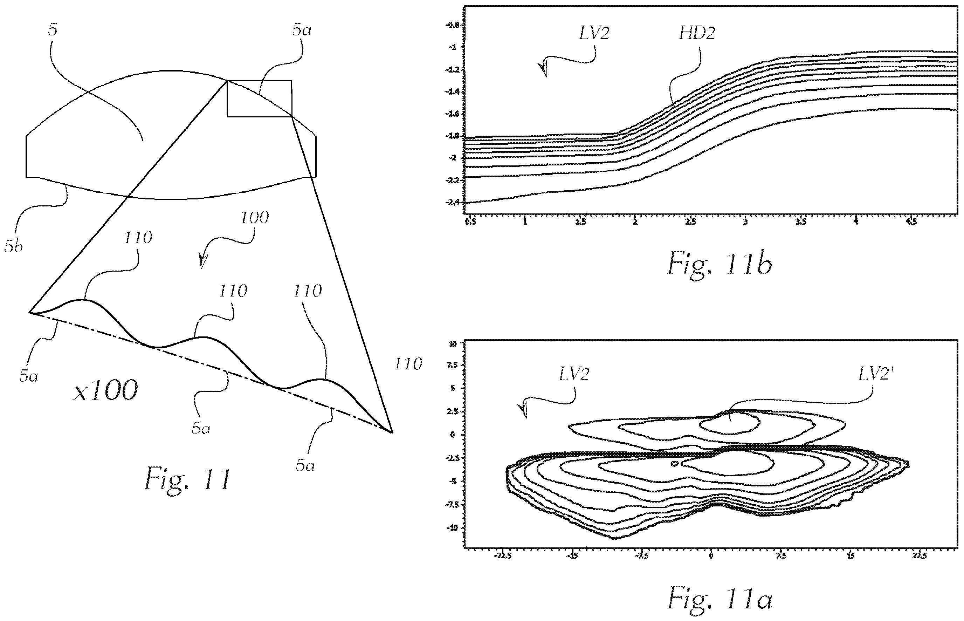

Fig. 11 eine Linse aus einem Projektionsmodul mit einer erfindungsgemäßen optischen Struktur an der Außenseite der Linse zusammen mit einer vergrößerten Darstellung eines Ausschnittes aus der Kontur der Außenseite,
Fig. 11 a eine schematische Darstellung einer Abblendlichtverteilung, erzeugt mit einer Beleuchtungsvorrichtung mit einer Linse aus Figur 11,
Fig. 11b eine schematische Darstellung der Abblendlichtverteilung aus Figur 11a im Bereich des Asymmetrie-Abschnittes der Hell-Dunkel-Grenze,

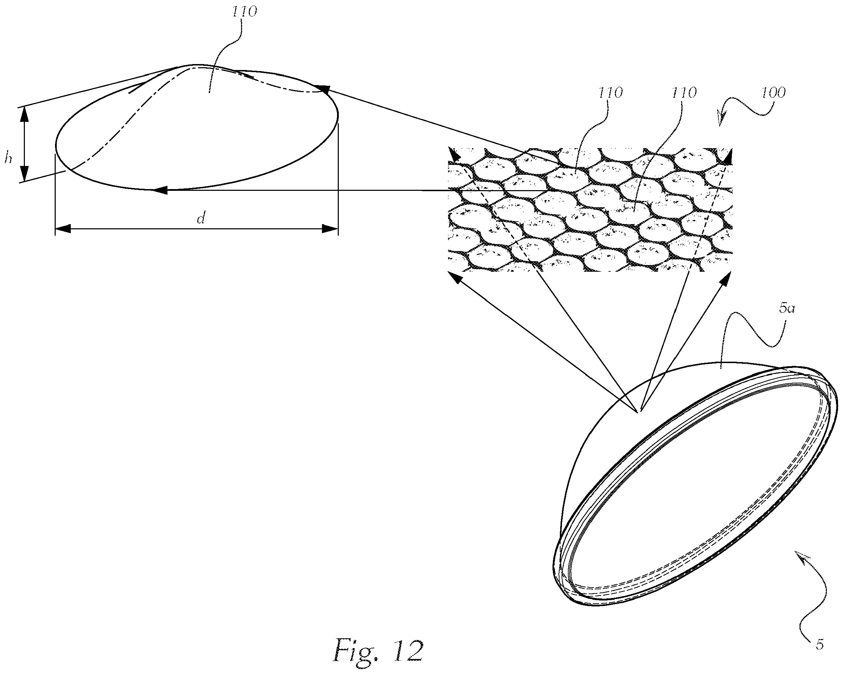

Fig. 12 eine Linse mit einer erfindungsgemäßen optischen Struktur in einer dreidimensionalen Ansicht, einen Ausschnitt aus der Linse in vergrößerter Darstellung, und weiters ein noch vergrößerten Ausschnitt aus dem bereits vergrößerten Ausschnitt,

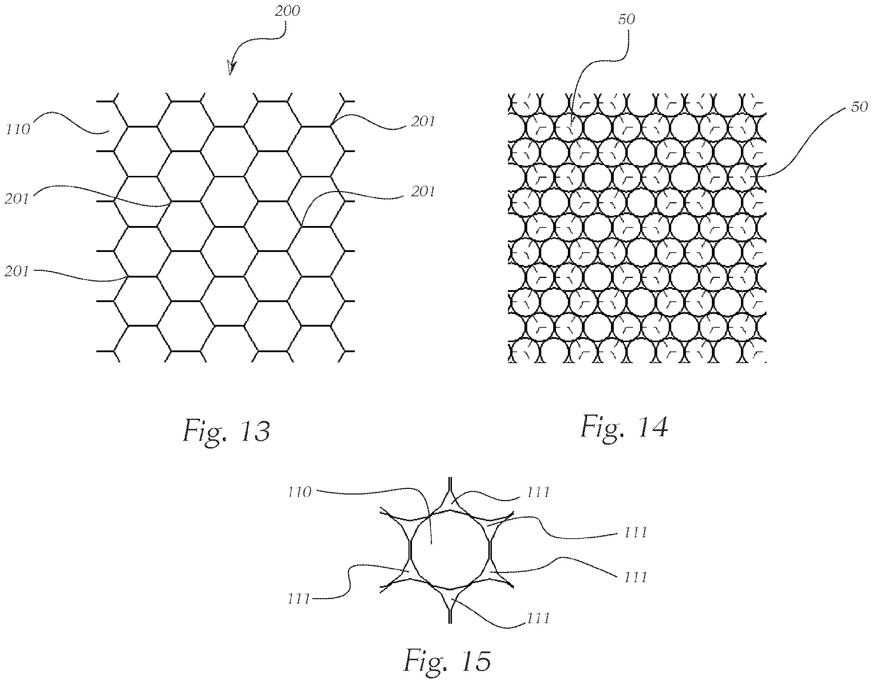

Fig. 13 eine hexagonale Gitterstruktur,
Fig. 14 die Gitterstruktur aus Figur 13, besetzt mit optischen Strukturelementen,
Fig. 15 die optische Struktur aus Figur 14 in einer vergrößerten Darstellung im Bereich eines optischen Strukturelementes,

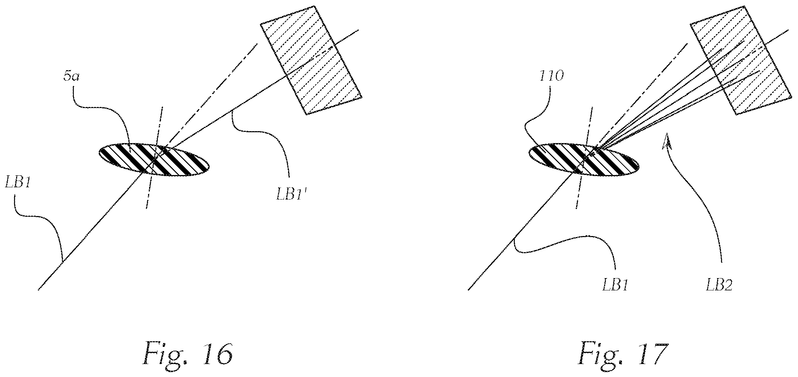

Fig. 16 den Strahlengang eines einzelnen Strahles durch eine unmodifizierte optische Struktur, beispielsweise durch einen Bereich eines Außenfläche einer unmodifizierten Linse,
Fig. 17 den Strahlengang durch das Flächenelement aus Figur 16, nun mit modifizierter optischer Struktur entsprechend der Erfindung,

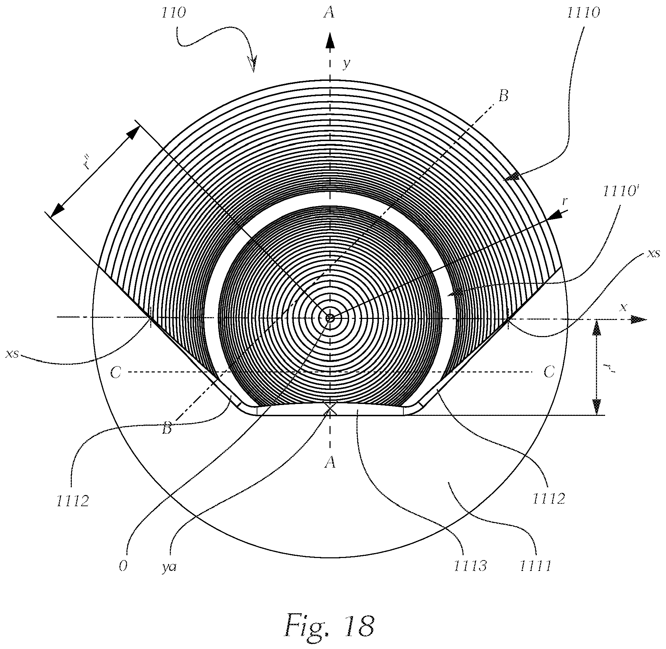

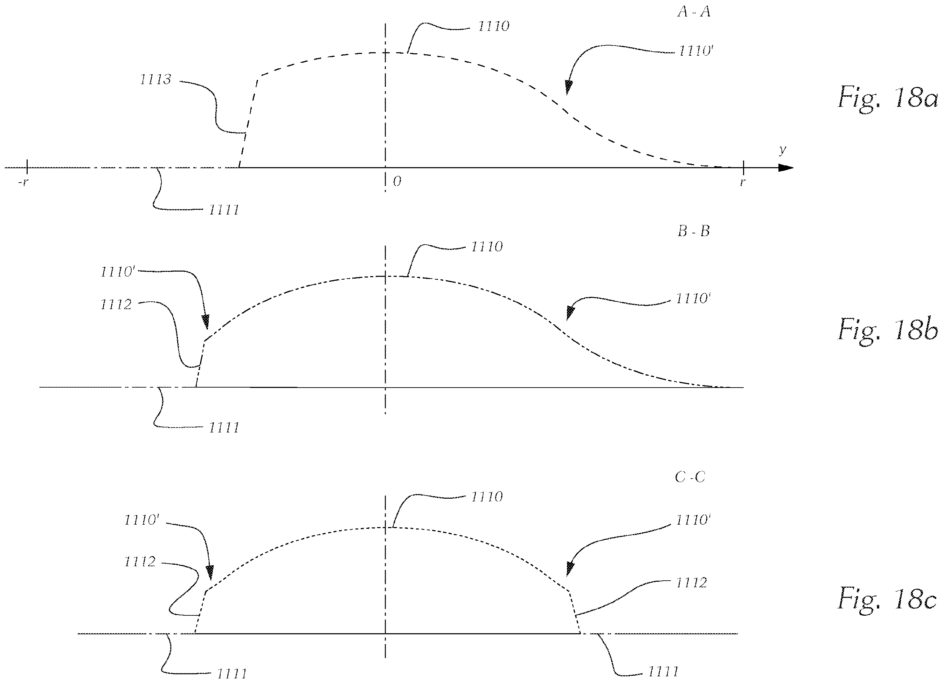

Fig. 18 eine Draufsicht auf ein optisches Strukturelement einer erfindungsgemäßen optischen Struktur mit schematischen Höhenschichtlinien,
Fig. 18a das optische Strukturelement aus Figur 18 in einem Schnitt entlang der Linie A-A,
Fig. 18b das optische Strukturelement aus Figur 18 in einem Schnitt entlang der Linie B-B, und
Fig. 18c das optische Strukturelement aus Figur 18 in einem Schnitt entlang der Linie C-C,

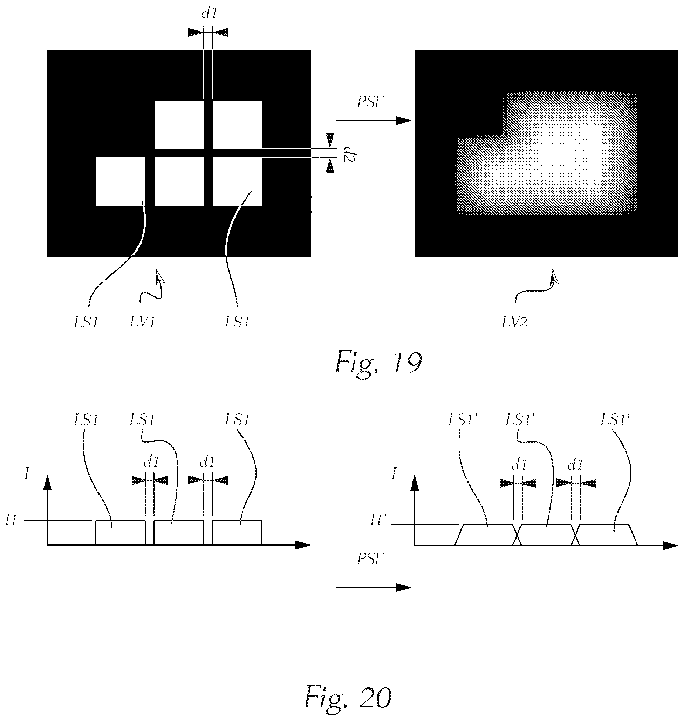

Fig. 19 eine unmodifizierte Lichtverteilung aufgebaut aus quadratischen Lichtsegmenten sowie die Abbildung des diese Lichtverteilung bildenden Lichtstroms mittels einer optischen Struktur mit quadratischen Strukturelementen, und
Fig. 20 den schematischen Verlauf der Lichtintensität in einer unmodifizierten und einer modifizierten Lichtverteilung.

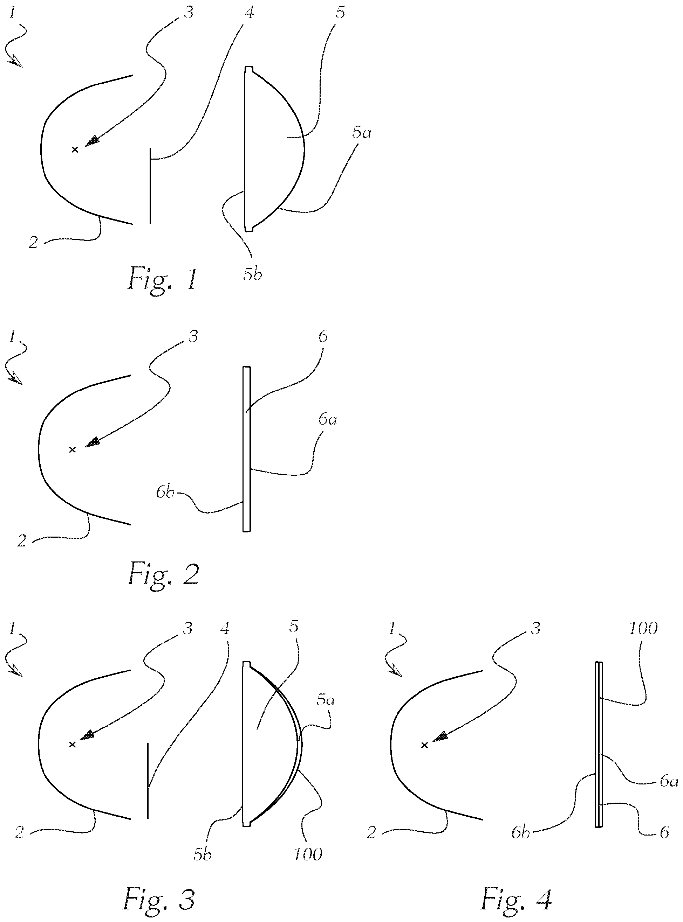

Im Folgenden wird vorerst auf die Figuren 1 - 6 Bezug genommen, welche - ohne Einschränkung des Schutzgegenstandes - prinzipielle Möglichkeiten der Anordnung einer erfindungsgemäßen optischen Struktur zeigen. Eine erfindungsgemäße optische Struktur kann auch bei anderen als den hier dargestellten Beleuchtungsvorrichtungen für Kraftfahrzeuge eingesetzt werden.

Figur 1 zeigt schematisch eine Beleuchtungsvorrichtung 1 in Form eines Projektionssystems, mit einem Reflektor 2, einer Lichtquelle 3, einer (optionalen) Blendenanordnung 4 und einer Projektionslinse 5, mit einer gekrümmte Außenseite 5a und einer Ebenen Innenseite 5b.

Figur 2 zeigt schematisch eine Beleuchtungsvorrichtung 1 in Form eines Reflexionssystems, mit einem Reflektor 2, einer Lichtquelle 3 und einer Streu- bzw. Abdeckscheibe 6, die Bezugszeichen 6a und 6b bezeichnen die Außenseite und die Innenseite der Scheibe 6.

Figur 3 zeigt eine schematische Darstellung des Projektionssystems aus Figur 1, wobei eine erfindungsgemäße optische Struktur 100 an der Außenseite einer Linse 5 angeordnet ist. Diese optische Struktur 100 nimmt dabei vorzugsweise die gesamte Außenseite 5a der Linse 5 ein.

Figur 4 zeigt eine schematische Darstellung des Reflexionsmoduls aus Figur 2 mit einer optischen Struktur 100 an der Außenseite der Abdeck- bzw. Streuscheibe 6, wobei vorzugsweise die optische Struktur die gesamte Außenseite der Scheibe 6 einnimmt.

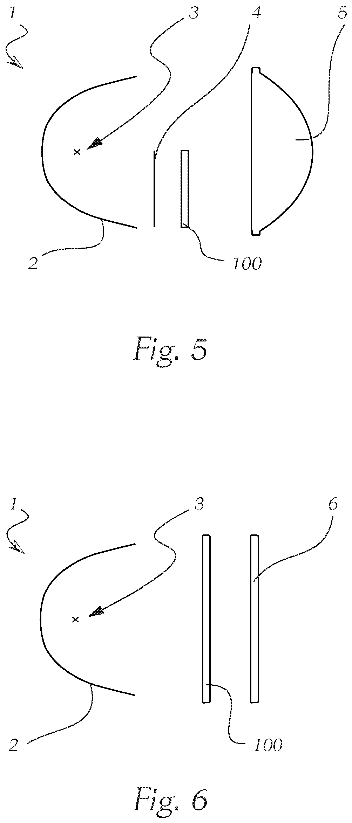

Figur 5 zeigt nochmals eine schematische Darstellung eines Projektionsmoduls 1 wie in Figur 1 dargestellt mit einer optischen Struktur 100 auf einem zusätzlichen Optikelemente wie einer Scheibe, wobei das Optikelement zwischen der Blende 4 und der Linse 5 angeordnet ist.

Figur 6 zeigt schließlich noch eine schematische Darstellung eines Reflexionsmoduls aus Figur 2 mit einer optischen Struktur 100 auf einem zusätzlichen Optikelemente wie einer Scheibe, welche zwischen der Lichtquelle 3 und der Streu- bzw. Abdeckscheibe 6 angeordnet ist.

Wie schon erwähnt dienen diese Darstellungen lediglich zur Veranschaulichung einiger der Möglichkeiten der Anordnung einer optischen Struktur 100. Grundsätzlich kann eine Beleuchtungsvorrichtung auch über mehrere Lichtquellen, beispielsweise über LEDs als Lichtquellen verfügen, und der Licht formende Körper kann in Form von einem oder mehreren Lichtleitern, Reflektoren, usw. ausgebildet sein.

Generell gilt, dass die optische Struktur 100 der Beleuchtungsvorrichtung 1 derart zugeordnet oder derart Teil der Beleuchtungsvorrichtung 1 ist, dass die optische Struktur 100 von im Wesentlichen dem gesamten (bzw. dem gesamten optisch relevanten) Lichtstrom der Beleuchtungsvorrichtung 1 durchstrahlt wird.

Insbesondere ist es von Vorteil, wenn die optische Struktur derart angeordnet und/oder ausgebildet ist, dass sie homogen ausgeleuchtet ist. Aus der Streufunktion kann für die Berechnung der optischen Struktur in diesem Fall einfach abgeleitet werden, welcher Bruchteil der Gesamtfläche wie stark brechen soll.

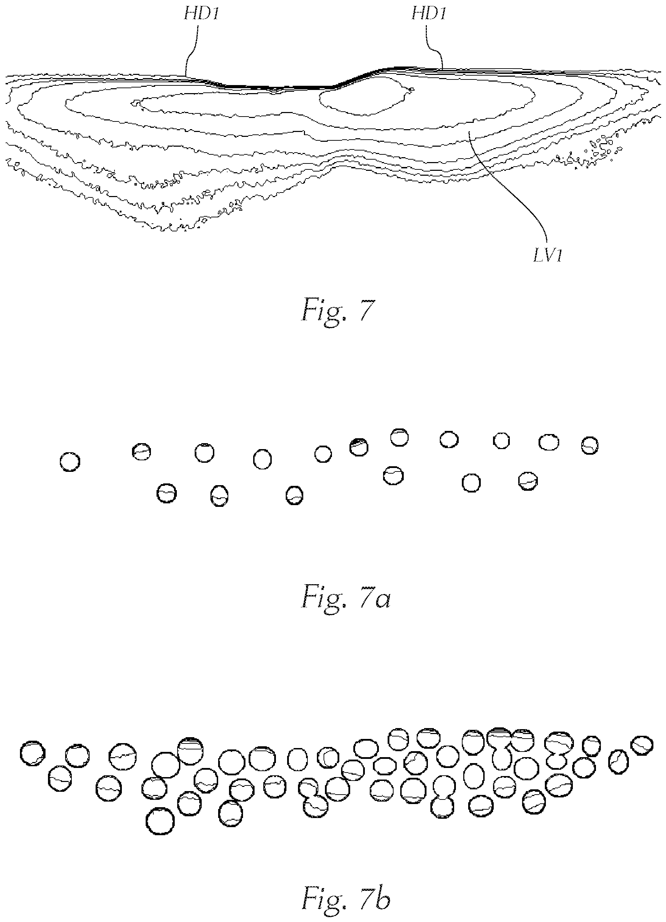

Figur 7 zeigt schematisch eine "herkömmliche", unmodifizierte Abblendlichtverteilung LV1, wie sie beispielsweise mit einer in Figur 1 gezeigten, bekannten Beleuchtungsvorrichtung 1 nach dem Stand der Technik erzeugt wird. Die Abblendlichtverteilung LV1 weist eine Hell-Dunkel-Grenze HD1 auf, welche in dem gezeigten Fall einen asymmetrischen Verlauf aufweist.

Figur 7a zeigt zur besseren Veranschaulichung der Wirkung einer erfindungsgemäßen optischen Struktur 100 einzelne, aus der Lichtverteilung LV1 herausgenommene Lichtflecken, Figur 7b zeigt eine noch größere Anzahl an solchen Lichtflecken.

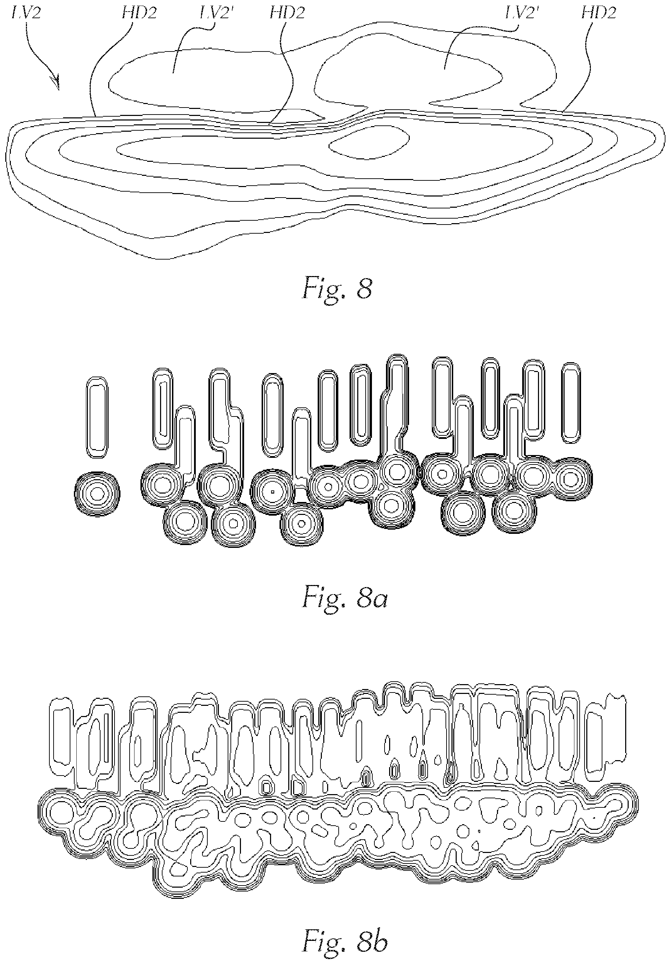

Betrachtet man nun Figur 8, so zeigt diese eine modifizierte Lichtverteilung LV2, wobei diese modifizierte Lichtverteilung LV2 durch Modifikation der ursprünglichen Lichtverteilung durch die optische Struktur 100 entsteht. Die modifizierte Lichtverteilung LV2 ergibt sich dabei durch Faltung der unmodifizierten Lichtverteilung LV1 mit einer Streufunktion PSF, wobei die optische Struktur 100 derart ausgebildet ist, dass die unmodifizierte Lichtverteilung LV1 entsprechend der Streufunktion PSF zu der neuen Lichtverteilung LV2 modifiziert wird.

Die modifizierte Lichtverteilung LV2 verfügt dabei über die im Wesentlichen selbe Verteilungsform wie die unmodifizierte Lichtverteilung LV1 und weist ebenfalls eine Hell-Dunkel-Grenze HD2 auf, welche allerdings einen geringeren Gradienten aufweist, wie dies durch den größeren Abstand der Isolux-Linien im Bereich der Hell-Dunkel-Grenze schematisch angedeutet ist. Die Hell-Dunkel-Grenze HD2 ist somit "weicher".

Weiters ist in Figur 8 noch zu erkennen, dass auch ein Bereich LV2' oberhalb der Hell-Dunkel-Grenze HD2 mit einer gewissen Beleuchtungsstärke beleuchtet wird, um ein Signlight zu erzeugen.

Eine Beleuchtungsvorrichtung erzeugt somit - ohne erfindungsgemäße optische Struktur - eine Abblendlichtverteilung LV1 mit einer Hell-Dunkel-Grenze HD1 mit einer gewissen Schärfe, beschrieben durch den sogenannten "Gradienten". Durch Vorsehen einer erfindungsgemäßen optischen Struktur 100 wird diese - unmodifizierte - Lichtverteilung LV1 derart modifiziert, dass die Schärfe der Hell-Dunkel-Grenze verringert wird, sodass sie den gesetzlichen Anforderungen entspricht und vom menschlichen Auge als angenehm wahrgenommen wird.

Außerdem wird bei der beschriebenen Ausführungsform ein Anteil des Lichtstroms der Beleuchtungsvorrichtung 1 in einen Bereich LV2' oberhalb der Hell-Dunkel-Grenze HD2 abgebildet. Auf diese Weise kann mit der erfindungsgemäßen optischen Struktur 100 auf optimale Weise ein eingangs beschriebenes Signlight erzeugt werden, indem beispielsweise jedes optische Strukturelement einen geringen Anteil des durch das Strukturelement durchtretenden Lichtstromes in einen entsprechenden Bereich ablenkt.

Insbesondere ist es von Vorteil, dass mit einer erfindungsgemäßen optischen Struktur sowohl der Gradient der Hell-Dunkel-Grenze eingestellt als auch ein Signlight erzeugt werden kann. Im Stand der Technik sind dazu zwei optische Strukturen notwendig, wobei einer ersten Struktur zum Erzeugen einer der beiden optischen "effekte" eine zweite Struktur überlagert wird, welche den zweiten optischen "Effekt" erzeugt. Bei der erfindungsgemäßen optischen Struktur wird dies durch eine Struktur bestehend aus im Wesentlichen identischen Strukturelementen erreicht, welche zur "Realisierung" einer Streufunktion wie oben beschrieben ausgebildet sind.

Bei einer konkreten Ausführungsform wie gezeigt ist dabei vorgesehen, dass der von der optischen Struktur abgelenkte Lichtstrom in einem Bereich LV2' zwischen 1,5° und 4°, insbesondere zwischen 2° und 4° über der HH-Linie liegt.

Bei einer beispielhaften Ausführungsform der Erfindung ist vorgesehen, dass von der optischen Struktur 0,5% - 1% des Lichtstroms der Beleuchtungsvorrichtung 1 in einen Bereich LV2' oberhalb der Hell-Dunkel-Grenze HD2 abgelenkt wird.

Betrachtet man die Figuren 8a und 8b, so zeigen diese die einzelnen Lichtflecken wie in Figur 7a und 7b gezeigt, modifiziert durch eine erfindungsgemäße optische Struktur 100 zur Gradientenaufweichung und gleichzeitigen Erzeugung eines Signlights. Wie zu erkennen ist, werden die einzelnen Lichtflecken - zumindest im Bereich der Hell-Dunkel-Grenze - verschmiert (Aufweichung), gleichzeitig wird ein (geringer) Teil des Lichtstromes, welcher ohne optische Struktur zu den Lichtflecken wie in Figur 7a und 7b gezeigt beiträgt, in einen Bereich oberhalb dieser Lichtflecken zur Bildung eines Signlights abgelenkt.

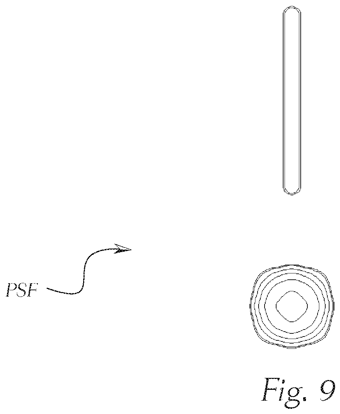

Figur 9 zeigt schließlich noch schematisch im Detail den Einfluss einer Streufunktion zur kombinierten Gradientenaufweichung und Erzeugung eines Signlights, bei welcher Streufunktion es sich vorzugsweise um eine sogenannte Point-Spread-Function handelt, wie sie in Figur 8 zur Anwendung kommt, auf einen einzelnen Lichtfleck aus Figur 7a bzw. 7b.

Gemäß der Erfindung wird somit die gesamte optische Struktur 100 betrachtet, und diese wird entsprechend über eine Streufunktion derart modifiziert bzw. geformt, dass sich das vollständige gewünschte Lichtbild LV2, LV2' ergibt. Anders als im Stand der Technik, wo beispielsweise zur Erzeugung der Gradientenaufweichung und von Signlight unterschiedliche Strukturelemente auf einer optischen Struktur herangezogen werden oder manche der bestehende Strukturelemente zusätzlich noch modifiziert werden, wird entsprechend der vorliegenden Erfindung die gewünschte (modifizierte) Lichtverteilung, ausgehend von einer unmodifizierten, mit der Beleuchtungsvorrichtung ohne optische Struktur erzeugten Lichtverteilung, dadurch realisiert, dass die unmodifizierte Lichtverteilung mit einer solchen Streufunktion gefaltet ist, dass sich die gewünschte Lichtverteilung ergibt, und die optische Struktur in ihrer Gesamtheit wird dann derart geformt, dass sie den gesamten Lichtstrom der Beleuchtungsvorrichtung derart modifiziert, dass sich aus der unmodifizierten Lichtverteilung eine der Streufunktion entsprechend modifizierte Lichtverteilung ergibt.

Bei einer bevorzugten Ausführungsform der Erfindung besteht die optische Struktur 100 aus einer Vielzahl von optischen Strukturelementen 110 besteht, welche Strukturelemente 110 eine Licht streuende Wirkung aufweisen.

Betrachtet man vorerst Figur 10, so zeigt diese eine Linse 5 wie beispielsweise in Figur 1 gezeigt. Die folgende Darstellung erfolgt dabei an Hand einer Linse, die im Wesentlichen identischen Aussagen gelten aber genauso für eine Streu- oder Abdeckscheibe, ein separates Bauteil, welches die optische Struktur trägt oder diese bildet, etc.

Die gekrümmte Außenseite 5a der Linse 5 ist in Figur 10 vergrößert dargestellt und es ist die im Wesentlichen glatte Oberfläche 5a zu erkennen. Mit einer solchen Linse ohne optische Struktur wird eine Abblendlichtverteilung LV1 mit einer Hell-Dunkel-Grenze HD1 wie in Figuren 10a, 10b gezeigt erzeugt (siehe auch Figur 7).

Figur 11 zeigt nochmals die Linse 5, nunmehr mit einer optischen Struktur 100 bestehend aus einer Vielzahl an optischen Strukturelementen 110 an ihrer Außenseite 5a. In der vergrößerten Darstellung der Außenseite 5a sind die Strukturelemente 110 ca. um einen Faktor 100 vergrößert bzw. erhöht, um diese sichtbar zu machen. Figur 11 stellt dabei eine rein schematische Darstellung dar.

Mit einer solchen optischen Struktur 100 mit Strukturelementen 110 wird eine modifizierte Lichtverteilung LV2 erzeugt, welche eine Abblendlichtverteilung mit Hell-Dunkel-Grenze HD2 und Signlight LV2' bildet (Figuren 11a, 11b).

Die Strukturelemente der optischen Struktur können grundsätzlich auf der Außen- und der Innenseite der Linse (oder einer Streuscheibe, etc.) angeordnet sein.

Vorzugsweise ist aber vorgesehen, dass die Strukturelemente 110 über genau eine definierte Fläche 5a eines Optikelementes, beispielsweise wie dargestellt der Außenseite 5a der Linse 5 verteilt sind. Vorteilhaft ist es dabei, wenn die Strukturelemente 110 über die gesamte definierte Fläche 5a verteilt sind.

Figur 12 zeigt als Beispiel noch einmal die bereits bekannte Linse 5, welche an ihrer Außenseite eine optische Struktur 100 aufweist, welche aus einzelnen Strukturelementen 110 besteht. Ein einzelnes Strukturelement 110 mit einem Durchmesser d und einer Höhe h ist ebenfalls schematisch in Figur 12 gezeigt.

Von besonderem Vorteil ist es, wenn die optischen Strukturelemente 110 derart ausgebildet sind, dass jedes Strukturelement 110 das durch das jeweilige Strukturelement 110 durchtretende Lichtbündel LB1 entsprechend der Streufunktion PSF zu einem modifizierten Lichtbündel LB2 modifiziert. Figur 16 zeigt den Durchtritt eines Lichtstrahls bzw. Lichtbündels LB1 durch einen Bereich auf einer unmodifizierten Linsenoberfläche 5a und das entsprechend abgelenkte Lichtbündel LB1'. Das Lichtbündel LB1 wird dabei von der Linsenoberfläche 5a lediglich abgelenkt, also seine Richtung verändert.

Figur 17 zeigt wiederum ein Lichtbündel LB1, welches durch ein Strukturelement 110 auf einer modifizierten Linsenaußenfläche tritt. Das austretende Lichtbündel LB2 wird einerseits wiederum in seiner Richtung abgelenkt, in etwa in dem Ausmaß wie das Lichtbündel LB1', weiters erfolgt aber noch eine Streuung eines Anteiles des Lichtstromes des Lichtbündels, wie in Figur 17 an Hand des Lichtbündels LB2 schematisch dargestellt.

Betrachtet man ein bestimmtes (unmodifiziertes) Lichtbündel LB1 aus dem gesamten Lichtstrom, so bildet dieses einen gewissen Beitrag zu der Lichtverteilung im Lichtbild (der gesamte Lichtstrom erzeugt die (Gesamt)-Lichtverteilung). Ein Strukturelement modifiziert nun ein durch das Strukturelement durchtretende Lichtbündel LB1 derart, dass der unmodifizierte Beitrag zu der Gesamtlichtverteilung entsprechend der Streufunktion verändert wird. Beispielsweise erzeugt das unmodifizierte Lichtbündel einen Lichtverteilungsbeitrag mit einer bestimmten Form, d.h. es werden bestimmte Bereiche auf der Fahrbahn oder auf einem Messschirm beleuchtet, andere Bereiche sind unbeleuchtet. Durch das Strukturelement 110 werden nun entsprechend der Streufunktion PSF auch Bereiche außerhalb des ursprünglich beleuchteten Bereiches mit einer bestimmten Intensität beleuchtet, während - nachdem der Gesamtlichtstrom konstant bleibt - die Intensität zumindest in Teilen des mit dem unmodifizierten Lichtbündel ursprünglich beleuchteten Bereiches reduziert ist.

Wie im Zusammenhang mit Figur 12 erwähnt, ist es von Vorteil, wenn die gesamte definierte Fläche 5a mit den optischen Strukturelementen 110 bedeckt ist.

Weiters ist es von besonderem Vorteil, wenn alle Strukturelemente 110 im Wesentlichen identisch ausgebildet sind. Jedes Strukturelement modifiziert dann den durch sie durchtretenden Lichtstrom auf identische Weise wie alle anderen Strukturelemente.

"Im Wesentlichen" identisch bedeutet dabei, dass bei einer ebenen Fläche, auf welcher die Strukturelemente angeordnet sind, diese tatsächlich identisch ausgebildet sind.

Bei gekrümmten Flächen, wie bei einer Lichtsaustrittsfläche 5a einer Linse 5, sind die Strukturelemente in ihrem zentralen Bereich jeweils identisch ausgebildet, während sich durch die Krümmung der Fläche die Randbereiche unterschiedlicher Strukturelemente (geringfügig) voneinander unterscheiden können.

Bei einer konkreten Ausführungsform ist entsprechend vorgesehen, alle Strukturelemente 110 in Bezug auf eine ebene bzw. als eben gedachte Fläche 111 identisch ausgebildet sind.

Entsprechend werden die Strukturelemente für eine ebene Fläche berechnet; werden diese so berechneten, identischen Strukturelemente - mit identischer Ausrichtung - auf eine gekrümmte Fläche beispielsweise einer Linse aufgesetzt, so sind wie oben schon erwähnt die Strukturelemente in ihrem zentralen Bereich nach wie vor identisch ausgebildet; in den Übergangsbereichen zu der ursprünglichen Linsenfläche, auf welche die Strukturelemente aufgesetzt sind, weisen die Strukturelemente aber ja nach Position auf der Linsenfläche auf Grund der Krümmung der Linsenoberfläche eine unterschiedliche Gestalt auf, was aber bei der geringen Größe der Strukturelemente in keinen oder nur sehr geringen Auswirkungen auf die Lichtverteilung resultiert

Weiters ist es von Vorteil, wenn alle Strukturelemente 110 identisch ausgerichtet sind.

Bei einer ebenen definierten Fläche bedarf dies keiner weiteren Erläuterungen. Bei gekrümmten Flächen (Beispiel: Linse) sind die Strukturelemente identisch entlang von Achsen durch die Fläche angeordnet, welche Achsen alle parallel zu einer Symmetrieachse oder zu einer optischen Achse der Fläche verlaufen (und nicht normal auf die Flächennormale).

Dies hat insbesondere fertigungstechnische Vorteile, da die optische Struktur und das Werkzeug zur Erzeugung der Struktur auf diese Weise einfach entfernt werden können, da sich keine Hinterschneidungen an der optischen Struktur bilden können.

Optimal lässt sich eine erfindungsgemäße optische Struktur bzw. ein modifiziertes Lichtbild erzeugen, wenn die Streufunktion PSF eine Point-Spread-Function ist.

Weiters gilt auch mit Vorteil, dass die Symmetrie eines Strukturelementes von der Symmetrie der Streufunktion PSF ab hängt. Das Strukturelement weist i.A. dieselbe Symmetrieklasse wie die PSF auf. Ist beispielsweise die PSF horizontal spiegelsymmetrisch, so weist auch das Strukturelement eine horizontale Spiegelsymmetrie auf.

Nochmals zurückkommend auf Figur 12 ist zu erkennen, dass bei der gezeigten Ausführungsform der Erfindung die Strukturelemente 110 an ihrer Basis einen Kreisquerschnitt aufweisen. Bei einer gekrümmten definierten Fläche, auf welcher die Strukturelemente angeordnet sind, wird dabei die Projektion der Basis - das ist die auf der definierten Fläche von einem Strukturelement eingenommenen Fläche - in eine Ebene betrachtet.

Strukturelemente sind somit vorzugsweise im Wesentlichen rotationssymmetrisch, können aber je nach Anwendung unterschiedliche Deformationen, d.h. Abweichungen von dieser rotationssymmetrischen Struktur aufweisen, wobei diese Deformationen großflächig sein können, in der Regel ab lokal ausgebildet sind.

Weiters ist es von Vorteil, dass die Abmessung eines Strukturelementes 110, in dem gezeigten Fall somit der Durchmesser d und/oder die Höhe h des Strukturelementes 110, größer, insbesondere sehr viel größer als die Wellenlänge von sichtbarem Licht ist/sind, sodass Beugungseffekte vermieden werden können.

Konkret liegt dabei die Höhe h der Strukturelemente 110 im µm-Bereich.

Beispielsweise liegt die Höhe h der Strukturelemente 110 im Bereich von 0,5 - 5 µm, wobei vorzugsweise die Höhe h der Strukturelemente 110 im Bereich von 1 - 3 µm liegt.

Bei einer konkreten Ausführungsform beträgt die Höhe h der Strukturelemente 110 ca. 2,7 µm.

Weiters ist bei einer konkreten Ausführungsform, z.B. bei Varianten mit den oben beschriebenen Höhen, vorgesehen, dass der Durchmesser d der Strukturelemente 110 im Millimeter-Bereich liegt.

Beispielsweise liegt der Durchmesser d der Strukturelemente 110 zwischen 0,5 - 2 mm, wobei vorzugsweise der Durchmesser d bzw. eine Länge der Strukturelemente 110 ca. 1 mm beträgt.

Bei einer beispielhaften Ausführungsform einer Linse, auf welcher die Strukturelemente angeordnet sind, beträgt der Durchmesser der Linse 90 mm.

In der Herstellung einfach ist eine optische Struktur, wenn die definierte Fläche 111 (bei der er sich in dem gezeigten Beispiel um die Linsenfläche 5a handelt), auf welcher die Strukturelemente 110 verteilt sind, in eine - gedachte -, vorzugsweise regelmäßige Gitterstruktur (200) unterteilt ist, wie eine solche in Figur 13 gezeigt ist. Dabei sind die Strukturelemente 110 an den Gitterpunkten 201 oder zwischen den Gitterpunkten 201 der Gitterstruktur 200 angeordnet.

Figur 14 zeigt, wie auf jedem Gitterpunkt 201 der Gitterstruktur 200 ein Strukturelement 110 mit kreisförmiger Basis sitzt.

Eine solche Anordnung ist insbesondere auch in Hinblick auf eine optimale optische Wirkung der optischen Struktur von Vorteil, da dadurch die optische Auswirkung der optischen Struktur optimal eingestellt werden kann.

Die "Regelmäßigkeit" der Struktur ist dabei bei einer gekrümmten optischen Fläche, auf welcher die optische Struktur angeordnet ist, in Bezug auf eine Projektion dieser definierten Fläche in eine Ebene zu sehen, wobei - auf Grund der geringen Gitterabstände - das Gitter auch bei einer gekrümmten definierten Flächen im Bereich von benachbarten Gitterpunkten als eben betrachtet werden kann.

Bei der gezeigten bevorzugten Ausführungsform der Erfindung ist vorgesehen, dass die Gitterstruktur ein hexagonales Gitter 200 bildet. Auf diese Weise kann eine optimale Flächenfüllung der definierten Fläche erreicht werden, insbesondere bei Strukturelementen 110 mit kreisrunder Basis, sodass ca. 87% der definierten Fläche mit Strukturelementen 110 bedeckt sind und lediglich ca. 13% unmodifizierte Fläche 111 (siehe Figur 15) vorliegen.

Nach Möglichkeit, wie dies in Figur 15 gezeigt ist, sind die Basisflächen der Strukturelement 110 derart zueinander angeordnet bzw. weisen einen solchen Durchmesser auf, dass benachbarte Strukturelemente 110 ineinander übergehen, vorzugsweise in dem Sinne, dass sie sich gerade berühren. Auf diese Weise kann eine optimale Flächenfüllung erreicht werden.

Außerdem ist es in optischer Hinsicht optimal, wenn der Übergang der Strukturelemente 110 zu der definierten Fläche 111 stetig, vorzugsweise C2-stetig, d.h. mit stetigen Tangenten erfolgt.

Bei einer konkreten Ausführungsform der Erfindung ist vorgesehen, dass benachbarte Gitterpunkte 201 einen Abstand von ca. 0,5 - 2mm, vorzugsweise von ca. 1 mm zueinander aufweisen.

Figur 18 zeigt schließlich noch ein Strukturelement 110 mit kreisrunder Basis in einer Draufsicht, Figur 18a zeigt einen Schnitt durch das optische Strukturelement aus Figur 18 entlang der Linie A-A, Figur 18b zeigt das optische Strukturelement aus Figur 18 in einem Schnitt entlang der Linie B-B, und Figur 18c zeigt das optische Strukturelement aus Figur 18 in einem Schnitt entlang der Linie C-C.

Das in den Figuren 18, 18a - 18c gezeigte Strukturelement 110, das insbesondere zur Realisierung einer Gradientenaufweichung und einer Signlight-Funktion besonders gut geeignet ist, zeichnet sich wie schon erwähnt durch eine kreisrunde Basis mit einem Radius r aus. Figur 18 zeigt weiters ein (x, y)-Koordinatenkreuz mit dem Ursprung im Mittelpunkt des Kreises mit Radius r. Die z-Richtung, welche normal auf die von x und y aufgespannte Ebene steht, entspricht im Wesentlichen der Lichtaustrittsrichtung bzw. verläuft parallel zu der optischen Achse der Beleuchtungseinrichtung, in welcher die optische Struktur bestehend aus solchen Strukturelementen zum Einsatz kommt. Während das Strukturelement, d.h. die Oberfläche 1110 des Strukturelementes 110 in der positiven y-Hälfte weitestgehend, bis auf kleine Bereiche, zu der definierten Fläche, auf welcher das Strukturelement 110 angeordnet ist, beabstandet ist, fallen im Großteil der negativen y-Hälfte, bis auf einen Bereich um den Ursprung 0, die Oberfläche 1111 des Strukturelementes 110 und die definierte Fläche zusammen. Die beiden Oberflächenbereiche 1110, 1110 sind über Übergangsflächen 1112, 1113 miteinander verbunden.

Das optische Strukturelement 110 erreicht seine maximale Höhe über dem Ursprung 0 und fällt in dem Bereich 1110 zu seinem Rand, d.h. zu dem Rand des Bereiches 1110 bei Radius r hin stetig, vorzugsweise C0-stetig ab. Der Bereich 1110 des optischen Elementes, welcher von der definierten Fläche beabstandet ist, weist vorzugsweise eine Kreissymmetrie auf, d.h. Punkte auf der Oberfläche 1110 mit identem Normalabstand zu der definierten Fläche liegen auf einem Kreis mit Mittelpunkt im Ursprung.

Der Bereich 1110 weist weiters einen abgeflachten Bereich 1110' auf, welcher konzentrisch um den Mittelpunkt 0 verläuft und sich bis zu den Übergangsflächen 1112, 1113 erstreckt. Der abgeflachte Bereich 1110'erstreckt sich dabei beispielsweise über eine Breite von ca. 0,05 - 0,1 Mal dem Radius r und liegt in einem Bereich zwischen 0,4 und 0,6 Radien r um den Mittelpunkt 0.

Die Übergangsfläche 1113 verläuft parallel zur x-Richtung, der Abstand r' der Fläche 1113 zu der x-Achse beträgt ca. 0,3 - 0,5 Radien r, vorzugsweise 0,4 Radien r (ya = +/- (0,3 - 0,5) r, vorzugsweise ya = +/- 0,4 r. Die Übergangsfläche 1113 erstreckt sich beiderseits der y-Achse vorzugsweise bis zu dem abgeflachten Bereich 1110'.

Die Übergangsflächen 1112 verlaufen symmetrisch zu der y-Achse, der Abstand r" der beiden Flächen 1112 zu einer Geraden parallel zu der Fläche 1112, welche Gerade durch den Mittelpunkt 0 verläuft, liegt im Bereich von 0,4 - 0,6 Radien r, vorzugsweise bei ca. 0,55 r. Die Flächen 1112 schneiden die x-Achse jeweils bei ca. xs = +/- (0,6 - 0,8) r, vorzugsweise gilt xs = +/- 0,75 r.

Die Übergangsfläche 1113 ist, wie dargestellt, vorzugsweise auf der y-Achse am flachsten und wird zur Übergangsfläche 1112 hin immer steiler. Dies setzt sich in den Übergangsflächen 1112 fort, die zum Rand r hin immer steiler werden.

Der Übergang zwischen den Übergangsflächen 1112, 1113 und der Flächen 1110 erfolgt vorzugsweise C0-stetig, ebenso der Übergang zu der Fläche 1111 hin.

Das dargestellte Strukturelement ist ca. 25-fach überhöht dargestellt, um Unterschiede in den Steigungen sichtbar zu machen. Tatsächlich liegen die Steigungswinkel der Oberfläche des Strukturelementes im Bereich 1110 zwischen ca. 0° und 1°, im Bereich 1111 naturgemäß bei 0°.

In den Übergangsbereichen liegen die Steigungen bei ca. 2° - 3°.

Während die Fläche 1111 Strahlen unverändert durchtreten lässt, verstreut der Bereich 1110 durchtretendes Licht derart, dass dies zu einer Aufweichung des Gradienten im Lichtbild führt. Die Übergangsflächen mit ihren größeren Steigungen hingegen lenken durchtretenden Lichtstrahlen nach oben, sodass diese im Lichtbild oberhalb der horizontalen Linie liegen und zu einer Signlight-Funktion führen.

Figur 19 zeigt als weiteres Anwendungsbeispiel in dem linken Bild eine unmodifizierte Lichtverteilung, bestehend aus einzelnen Lichtsegmenten, die in Spalten und Zeilen angeordnet sind. Wie in Figur 19 zu erkennen, weisen benachbarte Einzellicht-Verteilungen LS1 in horizontaler Richtung einen Abstand d1 auf, wobei alle Abstände d1 identisch sind. Weiter weisen benachbarte Verteilungen LS1 in vertikaler Richtung Abstände d2 auf, wobei alle vertikalen Abstände identisch sind. Vorzugsweise gilt weiters d1 = d2.

Die Verteilungen bzw. Lichtsegmente LS1 weisen typischerweise, aber nicht einschränkend, eine Breite und/oder eine Höhe von ca. 1° aufweisen. Bei rechteckigen Lichtsegmenten weisen diese üblicherweise in vertikaler Höhe eine (etwas) größere Ausdehnung auf als in horizontaler Richtung.

Durch den Abstand der Lichtsegmente LS1 bilden sich im Lichtbild dunkle Spalten. Die Breite dieser Spalten (welche den Abständen d1, d2 entspricht), ist dabei typischerweise kleiner gleich 0,5° und größer 0°, in der Regel kleiner gleich 0,2° oder kleiner gleich 0,1°. Ein typischer Bereich für die Breite d1, d2 der Spalten liegt zwischen 0,05° und 0,15°.

Die Lichtintensität ist in allen Einzellicht-Verteilungen LS1 im Wesentlichen identisch, ebenso ist vorteilhafterweise die Intensität in den Einzellicht-Verteilungen LS1 im Wesentlichen homogen über die gesamte Fläche der Einzellicht-Verteilung, wie dies in Figur 21, linke Seite schematisch angedeutet ist.

Durch die optische Struktur wird ein Teil jenes Lichtstroms, welcher ohne optische Struktur ausschließlich eine Einzellicht-Verteilung LS1 erzeugt, in die diese Einzellicht-Verteilung LS1 einrahmenden Spaltenbereiche, welche sich durch die Beabstandung der Einzellicht-Verteilungen LS1 zueinander ergeben, abgelenkt.

Mit einer erfindungsgemäßen optischen Struktur wie oben beschrieben kann nun eine Verstreuung des Lichtes, welches in diese Lichtsegmente abgestrahlt wird, erreicht werden, sodass die Gitterstruktur wie in Figur 19 gezeigt nicht mehr oder nur noch in einem nicht mehr störenden und gesetzeskonformen Ausmaß erkennbar ist (Figur 19, rechte Seite).

Die dunklen Randbereiche um die Einzellichtverteilungen werden somit ausschließlich mit Licht aus an diese Randbereiche angrenzenden Einzellichtverteilungen ausgeleuchtet, sodass bei einem Abschalten einzelner Einzellichtverteilungen die abgeschalteten Bereiche im Gesamtlichtbild nach wie vor dunkel erscheinen und nicht durch Streulicht "aus" anderen Einzellichtverteilungen beleuchtet sind.

Figur 20 zeigt schematisch den Verlauf der Lichtintensität bei einem unmodifizierten Lichtbild. In den Lichtsegmenten LS1 ist die Lichtintensität I konstant auf einem Wert I = I1, in den Spalten beträgt die Intensität I = 0.

Mit der optischen Struktur wird nun ein Teil jenes Lichtstromes, welcher exakt ein Lichtsegment LS1 bildet, in die angrenzenden Ränder gestreut. Dadurch erniedrigt sich die Intensität in den modifizierten Lichtsegmenten LS1' auf einen Wert I1' (wobei die Form der Segmente LS1' weiterhin den unmodifizierten Lichtsegmenten LS1 entspricht), allerdings wird ein Teil des Lichtes für das ursprüngliche Segment LS1 in die angrenzenden Ränder gestreut. Die Menge des bestreuten Lichtes ist dabei derart über die optische Struktur gewählt (bzw. die optische Struktur entsprechend ausgestalten), dass in einem Spalt wie in Figur 20, rechte Seite dargestellt, die Intensität von I = I1' am Rand des betrachteten Lichtsegmentes LS1' beträgt und dann linear auf den Wert I = 0 abnimmt, wobei I = 0 am Rand des angrenzenden Lichtsegmentes LS1' erreicht wird. Auf diese Weise kann eine Gesamt-Intensität im Spalt von I = I1' erreicht werden (Figur 20), da sich die Intensitäten des Streulichtes aus den beiden angrenzenden Lichtsegmenten addieren.

Mit der Erfindung wird es möglich, Signlight und Gradientenaufweichung über eine Point-Spread-Function zu beschreiben und diese in einem einzigen optischen Strukturelement einer Beleuchtungsvorrichtung umzusetzen, welches sich in der optischen Struktur wiederholt. Die beschriebene Vorgangsweise liefert eine große Flexibilität bezüglich des Erscheinungsbildes des Gradienten (bzw. der Weichheit der HD-Grenze), und anders als bei geometriezentrierten Ansätzen aus dem Stand der Technik kann der visuelle Eindruck über die Point-Spread-Function relativ einfach modelliert und umgesetzt werden.

## Patentansprüche

1. Beleuchtungsvorrichtung eines Kraftfahrzeugscheinwerfers mit zumindest einer, vorzugsweise genau einer optischen Struktur (100), welche Beleuchtungsvorrichtung (1) zur Abstrahlung von Licht eingerichtet ist, welches von der Beleuchtungsvorrichtung (1) abgestrahlte Licht eine vorgegebene Lichtverteilung (LV1) bildet, wobei
- die optische Struktur (100) der Beleuchtungsvorrichtung (1) derart zugeordnet oder derart Teil der Beleuchtungsvorrichtung (1) ist, dass die optische Struktur (100) von im Wesentlichen dem gesamten Lichtstrom der Beleuchtungsvorrichtung (1) durchstrahlt wird, und wobei die - von der Beleuchtungsvorrichtung (1) erzeugte, unmodifizierte Lichtverteilung (LV1) - von der optischen Struktur (100) zu einer vorgebbaren, modifizierten Lichtverteilung (LV2) modifiziert ist,
- wobei die modifizierte Lichtverteilung (LV2) durch Faltung der unmodifizierten Lichtverteilung (LV1) mit einer Streufunktion (PSF) gebildet ist,
- wobei die optische Struktur (100) derart ausgebildet ist, dass die unmodifizierte Lichtverteilung (LV1) entsprechend der Streufunktion modifiziert ist,
- wobei die optische Struktur (100) aus einer Vielzahl von optischen Strukturelementen (110) besteht, welche Strukturelemente (110) eine Licht streuende Wirkung aufweisen und über zumindest eine, vorzugsweise genau eine definierte Fläche (111) zumindest eines, vorzugsweise genau eines Optikelementes (5, 6) verteilt sind,
**dadurch gekennzeichnet, dass**
- die Lichtverteilung (LV1) als eine segmentierte aus Einzellicht-Verteilungen (LS1) gebildete abgeblendete Lichtverteilung (LV1), insbesondere eine Abblendlichtverteilung, ausgebildet ist, wobei die Einzellicht-Verteilungen (LS1) in n Zeilen und m Spalten angeordnet sind, wobei n > 1, m ≥ 1 oder n ≥ 1, m > 1 gilt, und die abgeblendete Lichtverteilung, insbesondere die Abblendlichtverteilung, eine Hell-Dunkel-Grenze (HD1) aufweist,
- die definierte Fläche (111) in ein - gedachtes -, hexagonales Gitter (200) unterteilt ist,
- wobei die Strukturelemente an den Gitterpunkten (201) oder zwischen den Gitterpunkten (201) des hexagonalen Gitters (200) angeordnet sind,
- wobei benachbarte Strukturelemente (110) ineinander übergehend, d.h. einander berührend angeordnet sind oder die Strukturelemente (110) voneinander isoliert, d.h. einander nicht berührend angeordnet sind, und
- die optische Struktur (100), insbesondere die Strukturelemente (110) derart ausgebildet ist/ sind bzw. die Streufunktion derart ausgestaltet ist, dass
* zumindest ein Teil des Lichtstroms der Beleuchtungsvorrichtung (1) in die Grenzbereiche, in welchen jeweils zwei Einzellicht-Verteilungen aneinandergrenzen, abgelenkt wird,
* ein Anteil des Lichtstroms der Beleuchtungsvorrichtung (1) in einen Bereich (LV2') oberhalb der Hell-Dunkel-Grenze (HD1, HD2) abgebildet wird, wobei der abgelenkte Lichtstrom vorzugsweise in einem Bereich (LV2') zwischen 1,5° und 4°, insbesondere zwischen 2° und 4° über der HH-Linie liegt, wobei vorzugsweise von der optischen Struktur ca. 1% des Lichtstroms der Beleuchtungsvorrichtung (1) in einen Bereich (LV2') oberhalb der Hell-Dunkel-Grenze (HD1, HD2) abgelenkt wird, und
* der Gradient der Hell-Dunkel-Grenze (HD1) der - unmodifizierten - Lichtverteilung (LV1) der Beleuchtungsvorrichtung (1) reduziert ist.

2. Beleuchtungsvorrichtung nach Anspruch 1, **dadurch gekennzeichnet, dass** die optischen Strukturelemente (110) derart ausgebildet sind, dass jedes Strukturelement (110) das durch das Strukturelement (110) durchtretende Lichtbündel (LB1) entsprechend der Streufunktion (PSF) zu einem modifizierte Lichtbündel (LB2) modifiziert.

3. Beleuchtungsvorrichtung nach Anspruch 1 oder 2, **dadurch gekennzeichnet, dass** die optische Struktur auf zumindest einer, vorzugsweise genau einer Grenzfläche eines Optikelementes, welches in Form einer Streuscheibe (6) oder in Form einer Abdeckscheibe (6) der Beleuchtungsvorrichtung (1) ausgebildet ist, und/ oder auf zumindest einer Oberfläche eines Optikelementes in Form einer Linse (5), vorzugsweise auf einer Lichtaustrittsseite (5a) der Linse (5), insbesondere einer Projektionslinse, der Beleuchtungsvorrichtung (1) angeordnet ist.

4. Beleuchtungsvorrichtung nach einem der Ansprüche 1 bis 3, **dadurch gekennzeichnet, dass** die Strukturelemente (110) der optischen Struktur (100) über die gesamte zumindest eine Oberfläche (5a, 6a) eines Optikelementes (5, 6) verteilt sind.

5. Beleuchtungsvorrichtung nach einem der Ansprüche 1 bis 4, **dadurch gekennzeichnet, dass** alle Strukturelemente (110) im Wesentlichen identisch ausgebildet sind, beispielsweise in Bezug auf eine ebene bzw. als eben gedachte Fläche (111) identisch ausgebildet sind und/ oder identisch ausgerichtet sind.

6. Beleuchtungsvorrichtung nach einem der Ansprüche 1 bis 5, **dadurch gekennzeichnet, dass** die Streufunktion (PSF) eine Point-Spread-Function ist.

7. Beleuchtungsvorrichtung nach einem der Ansprüche 1 bis 6, **dadurch gekennzeichnet, dass** die Abmessung eines Strukturelementes (110), beispielsweise ein Durchmesser (d) und/oder eine Höhe (h) des Strukturelementes (110), größer, insbesondere sehr viel größer als die Wellenlänge von sichtbarem Licht ist, wobei wenn die Abmessung des Strukturelements eine Höhe (h) ist, die Höhe (h) vorzugsweise im µm-Bereich, beispielsweise im Bereich von 0,5 - 5 µm, vorzugsweise im Bereich von 1-3 µm, liegt, insbesondere ca. 2,7 µm beträgt.

8. Beleuchtungsvorrichtung nach einem der Ansprüche 1 bis 7, **dadurch gekennzeichnet, dass** der Durchmesser (d) bzw. eine Länge der Strukturelemente (110) im Millimeter-Bereich, beispielsweise zwischen 0,5 - 2 mm liegt, vorzugsweise ca. 1 mm beträgt.

9. Beleuchtungsvorrichtung nach einem der Ansprüche 1 bis 8, **dadurch gekennzeichnet, dass** die Strukturelemente (110) an ihrer Basis einen Kreisquerschnitt aufweisen.

10. Beleuchtungsvorrichtung nach einem der Ansprüche 1 bis 9, **dadurch gekennzeichnet, dass** an jedem Gitterpunkt (201) oder zwischen den Gitterpunkten (201) der Gitterstruktur (200) jeweils genau ein Strukturelement (110) angeordnet ist.

11. Beleuchtungsvorrichtung nach einem der Ansprüche 1 bis 10, **dadurch gekennzeichnet, dass** benachbarte Gitterpunkte (201) einen Abstand von ca. 0,5 - 2mm, vorzugsweise von ca. 1 mm zueinander aufweisen.

12. Beleuchtungsvorrichtung nach einem der Ansprüche 1 bis 11, **dadurch gekennzeichnet, dass** die Strukturelemente (110) auf der definierten Fläche (111) zufällig, beispielsweise pseudo-random verteilt sind.

13. Beleuchtungsvorrichtung nach einem der Ansprüche 1 bis 12, **dadurch gekennzeichnet, dass** der Übergang der Strukturelemente (110) zu der definierten Fläche (111) stetig, vorzugsweise C2-stetig erfolgt.

14. Beleuchtungsvorrichtung nach einem der Ansprüche 1 bis 13, **dadurch gekennzeichnet, dass** benachbarte Einzellicht-Verteilungen (LS1) der unmodifizierten Lichtverteilung (LV1) einen definierten Abstand bzw. definierte Abstände (d1, d2) zueinander aufweisen, wobei vorzugsweise alle Abstände (d1) zwischen benachbarten Einzellicht-Verteilungen (LS1) in horizontaler Richtung und/oder alle Abstände (d2) zwischen benachbarten Einzellicht-Verteilungen (LS1) in vertikaler Richtung identisch sind, wobei vorzugsweise der Abstand (d1, d2) zwischen zwei benachbarten Einzellicht-Verteilungen (LS1) kleiner gleich 0,5° und größer 0° ist, beispielsweise zwischen 0,05° und 0,15° liegt, vorzugsweise kleiner gleich 0,2°, insbesondere kleiner gleich 0,1° ist.

15. Beleuchtungsvorrichtung nach einem der Ansprüche 1 bis 14, **dadurch gekennzeichnet, dass** die Einzellicht-Verteilungen (LS1) der unmodifizierten Lichtverteilung (LV1), insbesondere bei einer Projektion auf eine vertikale Ebene, eine rechtseckige oder quadratische Form und/ oder eine Breite und/ oder eine Höhe von ca. 1° aufweisen.

16. Beleuchtungsvorrichtung nach einem der Ansprüche 1 bis 15, **dadurch gekennzeichnet, dass** die durchschnittliche Lichtintensität in einem Spalt zwischen zwei Einzellicht-Verteilungen (LS1), erzeugt mit dem Lichtstrom, der für eine Einzellicht-Verteilung bestimmt ist, der halben durchschnittlichen Lichtintensität in einer angrenzenden Einzellicht-Verteilung (LS1) der modifizierten Lichtverteilung entspricht.

17. Beleuchtungsvorrichtung nach einem der Ansprüche 1 bis 16, **dadurch gekennzeichnet, dass** durch die optische Struktur ein Teil jenes Lichtstroms, welcher ohne optische Struktur ausschließlich eine Einzellicht-Verteilung (LS1) erzeugt, in die diese Einzellicht-Verteilung (LS1) einrahmenden Spaltenbereiche, welche sich durch die Beabstandung der Einzellicht-Verteilungen (LS1) zueinander ergeben, abgelenkt wird, wobei vorzugsweise ausgehend von einer betrachteten Einzellicht-Verteilung (LS1) die Lichtintensität in einem angrenzenden Spalt in Richtung der benachbarten Einzellicht-Verteilung (LS1) hin, beispielsweise auf Null, abnimmt, wobei die Abnahme vorzugsweise linear verläuft, wobei vorzugsweise die Lichtintensität in einem Spalt, unmittelbar an den Rand der betrachteten Einzellicht-Verteilung (LS1) angrenzend, im Wesentlichen der Lichtintensität der Einzellicht-Verteilung (LS1) der modifizierten Lichtverteilung an ihrem Rand bzw. der durchschnittlichen Lichtintensität in der Einzellicht-Verteilung (LS1) der modifizierten Lichtverteilung entspricht.

18. Beleuchtungsvorrichtung nach einem der Ansprüche 1 bis 17, **dadurch gekennzeichnet, dass** sie derart angeordnet und/ oder ausgebildet ist, dass im Wesentlichen der gesamte, vorzugsweise der gesamte Lichtstrom der Beleuchtungsvorrichtung (1) auf die optische Struktur (100) auftrifft.

19. Beleuchtungsvorrichtung nach einem der Ansprüche 1 bis 18, **dadurch gekennzeichnet, dass** sie derart angeordnet und/ oder ausgebildet ist, dass sie im Wesentlichen homogen ausgeleuchtet ist.

20. Beleuchtungsvorrichtung nach einem der Ansprüche 1 bis 19, **dadurch gekennzeichnet, dass** die Beleuchtungsvorrichtung (1) ein Projektionssystem ist, welches vorzugsweise zumindest eine Lichtquelle (3), zumindest einen Reflektor (2) und zumindest eine Linse (5), insbesondere eine Projektionslinse umfasst, wobei die zumindest eine optische Struktur (100) beispielsweise auf der Linse (5) und/oder einer zusätzlichen Abdeck- oder Streuscheibe angeordnet ist.

21. Beleuchtungsvorrichtung nach einem der Ansprüche 1 bis 19, **dadurch gekennzeichnet, dass** die Beleuchtungsvorrichtung (1) ein Reflexionssystem ist, welches vorzugsweise zumindest einen Freiform-Reflektor (2) und zumindest einen Lichtquelle (3) sowie zumindest eine Streuscheibe (6) und/oder zumindest eine Abdeckscheibe (6) umfasst, wobei die zumindest eine optische Struktur (100) beispielsweise auf der zumindest einen Streuscheibe (6) und/oder der zumindest einen Abdeckscheibe (6) und/oder einer zusätzlichen Abdeck- oder Streuscheibe angeordnet ist.

22. Fahrzeugscheinwerfer mit zumindest einer Beleuchtungsvorrichtung nach einem der Ansprüche 1 bis 21.

## Claims

1. A lighting device of a motor vehicle headlight with at least one, preferably exactly one optical structure (100), which lighting device (1) is designed to radiate light, the light radiated from the lighting device (1) forming a predefined light distribution (LV1), wherein
- the optical structure (100) of the lighting device (1) is associated with the lighting device (1) in such a way or is part of the lighting device (1) in such a way that substantially the entire flow of light from the lighting device (1) passes through the optical structure (100), and wherein the unmodified light distribution (LV1) produced by the lighting device (1) is modified by the optical structure (100) into a predefinable, modified light distribution (LV2),
- wherein the modified light distribution (LV2) is formed by convolution of the unmodified light distribution (LV1) with a scattering function (PSF),
- wherein the optical structure (100) consists of a multiplicity of optical structural elements (110), which structural elements (110) have a light-scattering effect and are distributed over at least one, preferably precisely one defined area (111) of at least one, preferably precisely one optics element (5, 6),
**characterised in that**
- the light distribution (LV1) is formed as a segmented, dimmed light distribution (LV1), in particular a dipped beam distribution, formed from individual light distributions (LS1), wherein the individual light distributions (LS1) are arranged in n rows and m columns, wherein n > 1, m ≥ 1 or n ≥ 1, m > 1, and the dimmed light distribution (LV1), in particular the dipped beam distribution, has a light-dark boundary (HD1),
- the defined area (111) is divided into a virtual, hexagonal grid structure (200),
- wherein the structural elements are arranged at the grid points (201) or between the grid points (201) of the hexagonal grid structure (200),
- wherein adjacent structural elements (110) transition into one another, i.e. are arranged in contact with one another, or the structural elements (110) are isolated from one another, i.e. do not contact one another, and
- the optical structure (100), in particular the structural elements (110), is/are formed in such a way, or the scattering function is designed in such a way, that
* at least some of the flow of light of the lighting device (1) is deflected into the boundary regions, in each of which two individual light distributions are arranged adjacently to one another,
* a portion of the flow of light of the lighting device (1) is mapped into a region (LV2') above the light-dark boundary (HD1, HD2), wherein preferably the deflected flow of light lies in a region (LV2') between 1.5° and 4°, in particular between 2° and 4°, above the HH line, wherein preferably approximately 1% of the flow of light of the lighting device (1) is deflected by said optical structure into a region (LV2') above the light-dark boundary (HD1, HD2), and
* the gradient of the light-dark boundary (HD1) of the - unmodified - light distribution (LV1) of the lighting device (1) is reduced.

2. The lighting device according to Claim 1, **characterised in that** the optical structural elements (110) are formed in such a way that each structural element (110) modifies the light bundle (LB1) passing through the structural element (110) into a modified light bundle (LB2) according to the scattering function.

3. The lighting device according to Claim 1 or 2, **characterised in that** the optical structure is arranged on at least one, preferably precisely one boundary surface of an optics element, which is formed in the manner of a diffusing plate (6) or in the manner of a covering plate (6) of the lighting device (1) and/or on at least one surface of an optics element in the form of a lens (5), in particular a projection lens, preferably on a light exit side (5a) of the lens (5) of the lighting device (1).

4. The lighting device according to any one of Claims 1 to 3, **characterised in that** the structural elements (110) of the optical structure (100) are distributed over the entire at least one surface (5a, 6a) of an optics element (5, 6).

5. The lighting device according to any one of Claims 1 to 4, **characterised in that** all structural elements (110) are substantially identical, in particular all structural elements (110) are identical in respect of a planar surface (111) or a surface (111) intended to be planar, and/or all structural elements (110) are identically oriented.

6. The lighting device according to any one of Claims 1 to 5, **characterised in that** the scattering function (PSF) is a point-spread function.

7. The lighting device according to any one of Claims 1 to 6, **characterised in that** the dimensions of a structural element (110), for example a diameter (d) and/or a height (h) of the structural element (110), are greater, in particular much greater than the wavelength of visible light, wherein if the dimension of the structural element is a height (h), then the height (h) preferably lies in the µm range, for example in the range of 0.5-5 µm, more preferably in the range of 1 - 3 µm, in particular is approximately 2.7 µm.

8. The lighting device according to any one of Claims 1 to 7, **characterised in that** the diameter (d) or a length of the structural elements (110) lies in the millimetre range, in particular between 0.5 - 2 mm, preferably the diameter (d) or a length of the structural elements (110) is approximately 1 mm.

9. The lighting device according to any one of Claims 1 to 8, **characterised in that** the structural elements (110) have a circular cross section at their base.

10. The lighting device according to any one of Claims 1 to 9, **characterised in that** precisely one structural element (110) is arranged at each grid point (201) or between the grid points (201) of the grid structure (200).

11. The lighting device according to any one of Claims 1 to 10, **characterised in that** adjacent grid points (201) are arranged at a distance of approximately 0.5 - 2 mm, preferably approximately 1 mm from one another.

12. The lighting device according to any one of Claims 1 to 11, **characterised in that** the structural elements (110) are distributed randomly, for example pseudo-randomly, over the defined area (111).

13. The lighting device according to any one of Claims 1 to 12, **characterised in that** the transition of the structural elements (110) to the defined area (111) is continuous, preferably C2 continuous.

14. The lighting device e according to any one of Claims 1 to 13, **characterised in that** adjacent individual light distributions (LS1) of the unmodified light distribution (LV1) are arranged at a defined distance or defined distances (d1, d2) from one another, wherein preferably all distances (d1) between adjacent individual light distributions (LS1) in a horizontal direction and/or all distances (d2) between adjacent individual light distributions (LS1) are identical in a vertical direction are identical, wherein in particular the distance (d1, d2) between two adjacent individual light distributions (LS1) is less than 0.5° and greater than 0°, preferably lies between 0.05° and 0.15°, more preferably is less than 0.2°, even more preferably is less than or equal to 0.1°.

15. The lighting device according to any one of Claims 1 to 14, **characterised in that** the individual light distributions (LS1) of the unmodified light distribution (LV1) have a rectangular or square shape, in particular with a projection onto a vertical plane and/ or have a width and/or a height of approximately 1°.

16. The lighting device according to any one of Claims 1 to 15, **characterised in that** the average light intensity in a gap between two individual light distributions (LS1), produced with the flow of light intended for an individual light distribution, corresponds to half the average light intensity in an adjacent individual light distribution (LS1) of the modified light distribution.

17. The lighting device according to any one of Claims 1 to 16, **characterised in that** part of the flow of light produced exclusively by one individual light distribution (LS1) without optical structure is deflected by the optical structure into the gap regions framing this individual light distribution (LS1), which gap regions are provided as a result of the distancing of the individual light distributions (LS1) from one another, wherein, in particular, proceeding from a considered individual light distribution (LS1) the light intensity in an adjacent gap decreases, preferably to zero, in the direction of the adjacent individual light distribution (LS1), wherein the decrease is preferably linear, wherein, in particular, the light intensity in a gap directly adjacent to the edge of the considered individual light distribution (LS1) corresponds substantially to the light intensity of the individual light distribution (LS1) of the modified light distribution at the edge thereof or to the average light intensity in the individual light distribution (LS1) of the modified light distribution.

18. The lighting device according to any one of Claims 1 to 17, **characterised in that** it is arranged and/or designed in such a way that substantially the entire, preferably the entire flow of light of the lighting device (1) impinges on the optical structure (100).

19. The lighting device according to any one of Claims 1 to 18, **characterised in that** it is arranged and/or designed in such a way that it is lit up substantially homogeneously.

20. The lighting device according to any one of Claims 1 to 19, **characterised in that** the lighting device (1) is a projection system, which in particular comprises at least one light source (3) at least one reflector (2) and at least one lens (5), in particular a projection lens, wherein the at least one optical structure (100) is preferably arranged on the lens (5) and/or on an additional covering plate or diffusing plate.

21. The lighting device according to any one of Claims 1 to 19, **characterised in that** the lighting device (1) is a reflection system, which in particular comprises at least one free-form reflector (2) and at least one light source (3) and at least one diffusing plate (6) and/or at least one covering plate (6), wherein the at least one optical structure (100) is preferably arranged on the at least one diffusing plate (6) and/or on the at least one covering plate (6) and/or on an additional covering or diffusing plate.

22. A vehicle headlight comprising at least one lighting device according to any one of Claims 1 to 21.

## Revendications

1. Dispositif d'éclairage d'un phare de véhicule automobile comportant au moins une, de préférence exactement une structure optique (100), lequel dispositif d'éclairage (1) est conçu pour irradier de la lumière, laquelle lumière irradiée par le dispositif d'éclairage (1) forme une distribution de lumière (LV1) prédéfinie,
- dans lequel la structure optique (100) est associée au dispositif d'éclairage (1) ou est une partie du dispositif d'éclairage (1) de telle sorte que la structure optique (100) est traversée par sensiblement tout le flux lumineux du dispositif d'éclairage (1) et dans lequel la distribution de lumière non modifiée (LV1), produite par le dispositif d'éclairage (1), est modifiée par la structure optique (100) en une distribution de lumière modifiée (LV2) pouvant être prédéfinie ;
- dans lequel la distribution de lumière modifiée (LV2) est formée par convolution de la distribution de lumière non modifiée (LV1) avec une fonction de diffusion (PSF) ;
- dans lequel la structure optique (100) est conçue de telle sorte que la distribution de lumière non modifiée (LV1) est modifiée selon la fonction de diffusion ;
- dans lequel la structure optique (100) consiste en une pluralité d'éléments structuraux optiques (110), lesquels éléments structuraux (110) présentent un effet de diffusion de lumière et sont distribués sur au moins une, de préférence exactement une surface définie (111) d'au moins un, de préférence d'exactement un élément d'optique (5, 6),
**caractérisé par le fait que**
- la distribution de lumière (LV1) est conçue en tant qu'une distribution de lumière (LV1) atténuée, formée à partir de distributions de lumière individuelles (LS1), segmentée, en particulier une distribution de feu de croisement, les distributions de lumière individuelles (LS1) étant disposées en n rangées et m colonnes, où n > 1, m ≥ 1 ou n ≥ 1, m > 1, et la distribution de lumière atténuée, en particulier la distribution de feu de croisement, présente une ligne de coupure clair-obscur (HD1) ;
- la surface définie (111) est divisée en une grille - fictive - hexagonale (200) ;
- dans lequel les éléments structuraux sont disposés aux points de grille (201) ou entre les points de grille (201) de la grille hexagonale (200) ;
- dans lequel des éléments structuraux adjacents (110) sont disposés de manière à se fondre les uns dans les autres, à savoir en contact les uns avec les autres ou les éléments structuraux (110) sont disposés en étant isolés les uns des autres, à savoir non en contact les uns avec les autres ; et
- la structure optique (100), en particulier les éléments structuraux (110) est/sont conçus de telle sorte que ou la fonction de diffusion est conçue de telle sorte que
* au moins une partie du flux lumineux du dispositif d'éclairage (1) est déviée dans les zones de limite dans chacune desquelles deux distributions de lumière individuelles sont disposées adjacentes ;
* une partie du flux lumineux du dispositif d'éclairage (1) est imagée dans une zone (LV2') au-dessus de la ligne de coupure clair-obscur (HD1, HD2), le flux lumineux dévié se trouvant de préférence dans une zone (LV2') entre 1,5° et 4°, en particulier entre 2° et 4° au-dessus de la ligne HH, de préférence environ 1 % du flux lumineux du dispositif d'éclairage (1) étant dévié par la structure optique dans une zone (LV2') au-dessus de la ligne de coupure clair-obscur (HD1, HD2) ; et
* le gradient de la ligne de coupure clair-obscur (HD1) de la distribution de lumière - non modifiée - (LV1) du dispositif d'éclairage (1) est réduit.

2. Dispositif d'éclairage selon la revendication 1, **caractérisé par le fait que** les éléments structuraux optiques (110) sont conçus de telle sorte que chaque élément structural (110) modifie le faisceau de lumière (LB1) traversant l'élément structural (110) en un faisceau de lumière modifié (LB2) selon la fonction de diffusion (PSF).

3. Dispositif d'éclairage selon l'une des revendications 1 ou 2, **caractérisé par le fait que** la structure optique est disposée sur au moins une, de préférence exactement une surface limite d'un élément d'optique, lequel est réalisé sous forme d'une plaque de diffusion (6) ou sous forme d'une plaque de recouvrement (6) du dispositif d'éclairage (1), et/ou sur au moins une surface d'un élément d'optique sous forme d'une lentille (5), de préférence sur un côté sortie de lumière (5a) de la lentille (5), en particulier d'une lentille de projection, du dispositif d'éclairage (1).

4. Dispositif d'éclairage selon l'une des revendications 1 à 3, **caractérisé par le fait que** les éléments structuraux (110) de la structure optique (100) sont distribués sur la totalité d'au moins une surface (5a, 6a) d'un élément d'optique (5, 6).

5. Dispositif d'éclairage selon l'une des revendications 1 à 4, **caractérisé par le fait que** tous les éléments structuraux (110) sont réalisés sensiblement identiques, par exemple sont réalisés identiques en ce qui concerne une surface plane ou entendue comme étant plane (111) et/ou sont orientés de manière identique.

6. Dispositif d'éclairage selon l'une des revendications 1 à 5, **caractérisé par le fait que** la fonction de diffusion (PSF) est une fonction d'étalement ponctuel.

7. Dispositif d'éclairage selon l'une des revendications 1 à 6, **caractérisé par le fait que** la dimension d'un élément structural (110), par exemple un diamètre (d) et/ou une hauteur (h) de l'élément structural (110) est plus grande, en particulier beaucoup plus grande que la longueur d'onde de lumière visible, où, lorsque la dimension de l'élément structural est une hauteur (h), la hauteur (h) se situe de préférence dans la plage des µm, par exemple dans la plage de 0,5-5 µm, de préférence dans la plage de 1-3 µm, en particulier étant environ 2,7 µm.

8. Dispositif d'éclairage selon l'une des revendications 1 à 7, **caractérisé par le fait que** le diamètre (d) ou une longueur des éléments structuraux (110) se situe dans la plage des millimètres, par exemple entre 0,5 - 2 mm, de préférence étant d'environ 1 mm.

9. Dispositif d'éclairage selon l'une des revendications 1 à 8, **caractérisé par le fait que** les éléments structuraux (110) présentent une section transversale circulaire à leur base.

10. Dispositif d'éclairage selon l'une des revendications 1 à 9, **caractérisé par le fait qu'**exactement un élément structural (110) est disposé à chaque point de grille (201) ou entre les points de grille (201) de la structure de grille (200).

11. Dispositif d'éclairage selon l'une des revendications 1 à 10, **caractérisé par le fait que** des points de grille adjacents (201) présentent une distance d'environ 0,5 - 2 mm, de préférence d'environ 1 mm l'un par rapport à l'autre.

12. Dispositif d'éclairage selon l'une des revendications 1 à 11, **caractérisé par le fait que** les éléments structuraux (110) sont distribués sur la surface définie (111) de manière aléatoire, par exemple de manière pseudo-aléatoire.

13. Dispositif d'éclairage selon l'une des revendications 1 à 12, **caractérisé par le fait que** la transition des éléments structuraux (110) à la surface définie (111) est continue, de préférence continue en C2.

14. Dispositif d'éclairage selon l'une des revendications 1 à 13, **caractérisé par le fait que** des distributions de lumière individuelles voisines (LS1) de la distribution de lumière non modifiée (LV1) présentent une distance définie ou des distances définies (d1, d2) les unes par rapport aux autres, où de préférence toutes les distances (d1) entre des distributions de lumière individuelles voisines (LS1) sont identiques dans la direction horizontale et/ou toutes les distances (d2) entre des distributions de lumière individuelles voisines (LS1) sont identiques dans la direction verticale, où de préférence la distance (d1, d2) entre deux distributions de lumière individuelles voisines (LS1) est inférieure ou égale à 0,5° et supérieure à 0°, par exemple se situe entre 0,05° et 0,15°, de préférence est inférieure ou égale à 0,2°, en particulier inférieure ou égale à 0,1°.

15. Dispositif d'éclairage selon l'une des revendications 1 à 14, **caractérisé par le fait que** les distributions de lumière individuelles (LS1) de la distribution de lumière non modifiée (LV1) présentent en particulier dans le cas d'une projection sur un plan vertical une forme rectangulaire ou carrée et/ou une largeur et/ou une hauteur d'environ 1°.

16. Dispositif d'éclairage selon l'une des revendications 1 à 15, **caractérisé par le fait que** l'intensité de lumière moyenne dans un intervalle entre deux distributions de lumière individuelles (LS1), produite par le flux lumineux, qui est déterminée pour une distribution de lumière individuelle, correspond à la moitié de l'intensité de lumière moyenne dans une distribution de lumière individuelle adjacente (LS1) de la distribution de lumière modifiée.

17. Dispositif d'éclairage selon l'une des revendications 1 à 16, **caractérisé par le fait que** par la structure optique une partie de chaque flux lumineux, lequel produit exclusivement une distribution de lumière individuelle (LS1) sans structure optique, est déviée dans les zones d'intervalle encadrant cette distribution de lumière individuelle (LS1), lesquelles se produisent par l'espacement des distributions de lumière individuelles (LS1) les unes par rapport aux autres, où de préférence sur la base d'une distribution de lumière individuelle considérée (LS1) l'intensité de lumière dans un intervalle adjacent diminue dans la direction de la distribution de lumière individuelle adjacente (LS1), de préférence à zéro, où la diminution est de préférence linéaire, où de préférence l'intensité de lumière dans un intervalle immédiatement adjacent au bord de la distribution de lumière individuelle considérée (LS1) correspond sensiblement à l'intensité de lumière de la distribution de lumière individuelle (LS1) de la distribution de lumière modifiée sur son bord ou à l'intensité de lumière moyenne dans la distribution de lumière individuelle (LS1) de la distribution de lumière modifiée.

18. Dispositif d'éclairage selon l'une des revendications 1 à 17, **caractérisé par le fait qu'**il est agencé et/ou conçu de telle sorte que sensiblement tout, de préférence tout le flux lumineux du dispositif d'éclairage (1) frappe la structure optique (100).

19. Dispositif d'éclairage selon l'une des revendications 1 à 18, **caractérisé par le fait qu'**il est agencé et/ou conçu de telle sorte qu'il est éclairé de façon sensiblement homogène.

20. Dispositif d'éclairage selon l'une des revendications 1 à 19, **caractérisé par le fait que** le dispositif d'éclairage (1) est un système de projection, lequel comporte de préférence au moins une source lumineuse (3), au moins un réflecteur (2) et au moins une lentille (5), en particulier une lentille de projection, où la au moins une structure optique (100) est disposée par exemple sur la lentille (5) et/ou sur une plaque de recouvrement ou de diffusion supplémentaire.

21. Dispositif d'éclairage selon l'une des revendications 1 à 19, **caractérisé par le fait que** le dispositif d'éclairage (1) est un système de réflexion, lequel comporte de préférence au moins un réflecteur de forme libre (2) et au moins une source lumineuse (3) ainsi qu'au moins une plaque de diffusion (6) et/ou au moins une plaque de recouvrement (6), où la au moins une structure optique (100) est disposée par exemple sur la au moins une plaque de diffusion (6) et/ou la au moins une plaque de recouvrement (6) et/ou sur une plaque de recouvrement ou de diffusion supplémentaire.

22. Phare de véhicule comportant au moins un dispositif d'éclairage selon l'une des revendications 1 à 21.
